# EUROPEAN PATENT SPECIFICATION

(11) **EP 3 285 431 B1**
(45) Date of publication and mention of the grant of the patent: **30.10.2019**
(21) Application number: 15893670.8
(22) Date of filing: 01.06.2015
(51) Int. Cl.: H04L 29/08, H04L 12/24, H04L 29/06, G06F 9/455

(54) **BASE STATION CONGESTION CONTROL BASED ON VIRTUALIZED NETWORK RESOURCES MANAGEMENT**
ÜBERLASTUNGSREGELUNG EINER BASISSTATION AUF BASIS EINER VIRTUALISIERTEN RESSOURCENVERWALTUNG
CONTRÔLE DE LA CONGESTION CONTRÔLE D'UNE STATION DE BASE FONDÉ SUR LA GESTION DE RESSOURCES RÉSEAU VIRTUALISÉES

(43) Date of publication of application: 21.02.2018
(73) Proprietor: Huawei Technologies Co., Ltd., Longgang District Shenzhen, Guangdong 518129 (CN)
(72) Inventor: WEI, Anni, Shenzhen Guangdong 518129 (CN)
(74) Representative: Epping - Hermann - Fischer
(86) International application number: PCT/CN2015/080508
(87) International publication number: WO 2016/192011

(56) References cited:
- WO-A1-2004/002085
- WO-A1-2015/077460
- CN-A- 102 378 186
- CN-A- 102 378 186
- CN-A- 104 253 866
- UWE RAUSCHENBACH ET AL: "RESERVATION HANDLING ALTERNATIVE;NFVIFA(15)000520_Reservation_h andling_alternative", ETSI DRAFT; NFVIFA(15)000520_RESERVATION_HANDLING_ALTE RNATIVE, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 15 April 2015 (2015-04-15) , pages 1-8, XP014260584, [retrieved on 2015-04-15]
- 'Network Functions Virtualisation (NFV); Architectural Framework' ETSI GS NFV 002 V1.1.1 October 2013, pages 13 - 20, XP055249085

## Description

### TECHNICAL FIELD

The present invention relates to the communications field, and in particular, to a congestion control method and a network element device.

### BACKGROUND

An NFV (Network Function Virtulization, network functions virtualization) network is a network capable of decoupling hardware from software, so that functions of a network device no longer depend on dedicated hardware resources, and network resources may be flexibly shared. Just because of this type of flexibly shared network resources, a large quantity of new services can be quickly developed or deployed in the NFV network. More deployed services cause a larger quantity of users accessing the NFV network. Accessing the NFV network by a large quantity of users usually causes congestion on a data plane of the NFV network.

Currently, when the NFV network is congested, congestion needs to be controlled to eliminate congestion. An implementation procedure may be: An eNB (evolved Node B, evolved NodeB) detects whether the NFV network is congested, and when detecting that the NFV network is congested, the eNB sends a RAN (Radio Access Network, radio access network) user plane congestion indication to a PCRF (Policy And Charging Rules Function, policy and charging rules function). The PCRF receives the RAN user plane congestion indication, and performs congestion control according to a congestion control policy, for example, preventing a new user from accessing the NFV network or reducing bit rates of some services in the NFV network, so as to reduce load.

During implementation of the present invention, the prior art has at least the following problems:
All policies used when the PCRF controls congestion are preventing a new user from accessing the NFV network or reducing a bit rate of a service. Reducing the bit rate of the service causes a reduction in service transmission quality, and preventing the new user from accessing the NFV network causes the user to fail to request a service.

UWE RAUSCHENBACH ET AL, "RESERVATION HANDLING ALTERNATIVE;NFVIFA(15)000520_Reservation_handling_alternative", ETSI DRAFT; NFVIFA(15)000520_RESERVATION_HANDLING_ALTERNATIVE, EUROPEAN TELECOMMUNICATIONS STANDARDS INSTITUTE (ETSI), 650, ROUTE DES LUCIOLES ; F-06921 SOPHIA-ANTIPOLIS ; FRANCE, (20150415), vol. ISG - NFV, pages 1 - 8, proposes for the reservation handling resource reservation by NFVO and VNFM.

### SUMMARY

To improve service transmission quality or ensure a normal service request from a user, embodiments of the present invention provide a congestion control method and a network element device.

The invention is defined by the independent claims. Advantageous embodiments of the invention are given in the sub-claims.

The technical solutions are as follows:
According to a first aspect, the present invention provides a congestion control method, where the method includes:
receiving a scaling request message, where the scaling request message carries a resource parameter that is used to represent a size of a resource required by a base station encountering congestion;
sending the scaling request message to a network functions virtualization orchestrator NFVO, where the scaling request message is used to request the NFVO to determine a virtualized infrastructure manager VIM capable of providing the resource required by the base station;
receiving a resource reservation success message sent by the NFVO, where the resource reservation success message carries identification information of the VIM; and
requesting, according to the resource parameter and the identification information of the VIM, the VIM to allocate the resource required by the base station, and configuring the allocated resource for the base station, to perform congestion control on the base station.

With reference to the first aspect, in a first possible implementation of the first aspect, the requesting, according to the resource parameter and the identification information of the VIM, the VIM to allocate the resource required by the base station includes:
determining, according to the resource parameter, the resource size of the resource required by the base station;
sending a resource allocation request message to the VIM according to the identification information of the VIM, where the resource allocation request message carries the resource size, and the resource allocation request message is used to request the VIM to allocate the resource according to the resource size; and
receiving the allocated resource sent by the VIM.

With reference to the first aspect or the first possible implementation of the first aspect, in a second possible implementation of the first aspect, the resource parameter is the resource size of the resource required by the base station or a traffic volume of services, to which no resources are allocated, in the base station.

With reference to the first aspect, the first possible implementation of the first aspect, or the second possible implementation of the first aspect, in a third possible implementation of the first aspect, the method further includes:
receiving a scaling failure message sent by the NFVO, where the scaling failure message carries a resource insufficiency indication, and the scaling failure message is sent when the NFVO determines that there is no VIM capable of providing the resource required by the base station; and
sending the scaling failure message to the base station, where the resource insufficiency indication is used to instruct the base station to request a policy and charging rules function PCRF to perform congestion control.

With reference to any one of the first aspect or the first to the third possible implementations of the first aspect, in a fourth possible implementation of the first aspect, after the configuring the allocated resource for the base station, the method further includes:
sending an upgrade message to the NFVO, where the upgrade message carries identification information of the allocated resource, identification information of the base station, and the identification information of the VIM, and the upgrade message is used to request the NFVO to associate the identification information of the allocated resource, the identification information of the base station, and the identification information of the VIM.

According to a second aspect, the present invention provides a congestion control method, where the method includes:
receiving a scaling request message, where the scaling request message carries a resource parameter used to represent a size of a resource required by a base station encountering congestion;
determining, according to the resource parameter, a virtualized infrastructure manager VIM capable of providing the resource required by the base station; and
sending a resource reservation success message to a virtualized network function manager VNFM, where the resource reservation success message carries identification information of the VIM, and the resource reservation success message is used to instruct the VNFM to request, according to the identification information of the VIM, the VIM to allocate the resource required by the base station, and to instruct the VNFM to configure the allocated resource for the base station.

With reference to the second aspect, in a first possible implementation of the second aspect, the determining, according to the resource parameter, a virtualized infrastructure manager VIM capable of providing the resource required by the base station includes:
determining, according to the resource parameter, the resource size of the resource required by the base station;
querying, in a correspondence between a VIM and a quantity of idle resources, whether a VIM whose quantity of idle resources is greater than or equal to the resource size exists; and
if the VIM exists, determining the VIM whose quantity of idle resources is greater than or equal to the resource size as the VIM capable of providing the resource required by the base station.

With reference to the second aspect or the first possible implementation of the second aspect, in a second possible implementation of the second aspect, the method further includes:
if it is determined that there is no VIM capable of providing the resource required by the base station, sending a scaling failure message to the VNFM, where the scaling failure message carries a resource insufficiency indication, the scaling failure message is used to request the VNFM to send the scaling failure message to the base station, and the resource insufficiency indication is used to instruct the base station to request a policy and charging rules function PCRF to perform congestion control.

With reference to the second aspect, the first possible implementation of the second aspect, or the second possible implementation of the second aspect, in a third possible implementation of the second aspect, before the sending a resource reservation success message to a virtualized network function manager VNFM, the method further includes:
sending a resource reservation request message to the VIM, where the resource reservation request message carries the size of the resource required by the base station, and the resource reservation request message is used to request the VIM to determine, according to the resource size, whether the VIM is capable of providing the resource required by the base station; and
receiving a resource reservation success message that is sent when the VIM determines that the VIM is capable of providing the resource required by the base station.

With reference to any one of the second aspect or the first to the third possible implementations of the second aspect, in a fourth possible implementation of the second aspect, after the sending a resource reservation success message to a virtualized network function manager VNFM, the method further includes:
receiving an upgrade message sent by the VNFM, where the upgrade message carries identification information of the allocated resource, identification information of the base station, and the identification information of the VIM; and
associating the identification information of the allocated resource, the identification information of the base station, and the identification information of the VIM.

With reference to any one of the second aspect or the first to the fourth possible implementations of the second aspect, in a fifth possible implementation of the second aspect, the resource parameter is the resource size of the resource required by the base station or a traffic volume of services, to which no resources are allocated, in the base station.

According to a third aspect, the present invention provides a congestion control method, where the method includes:
when it is detected that a base station encounters congestion, sending a scaling request message to a virtualized network function manager VNFM, where the scaling request message carries a resource parameter used to represent a size of a resource required by the base station, and the scaling request message is used to request the VNFM to allocate, according to the resource parameter, the resource required by the base station; and
if the allocated resource that is sent by the VNFM when the resource is successfully allocated is received, running a service according to the allocated resource, to perform congestion control.

With reference to the third aspect, in a first possible implementation of the third aspect, the method further includes:
if a scaling failure message that is sent by the VNFM when the resource is unsuccessfully allocated is received, requesting, according to an indication of the scaling failure message, a policy and charging rules function PCRF to perform congestion control on the base station.

With reference to the third aspect or the first possible implementation of the third aspect, in a second possible implementation of the third aspect, before the sending a scaling request message to a virtualized network function manager VNFM, the method further includes:
sending a radio access network RAN user plane congestion indication to the PCRF; and
receiving a resource control indication RCI rule that is sent by the PCRF according to the RAN user plane congestion indication; and
correspondingly, the sending a scaling request message to a virtualized network function manager VNFM includes:
   sending the scaling request message to the VNFM according to the RCI rule.

According to a fourth aspect, the present invention provides a network element device, where the network element device includes a transceiver and a processor;
the transceiver is configured to: receive a scaling request message, where the scaling request message carries a resource parameter used to represent a size of a resource required by a base station encountering congestion; send the scaling request message to a network functions virtualization orchestrator NFVO, where the scaling request message is used to request the NFVO to determine a virtualized infrastructure manager VIM capable of providing the resource required by the base station; and receive a resource reservation success message sent by the NFVO, where the resource reservation success message carries identification information of the VIM; and
the processor is configured to: request, according to the resource parameter and the identification information of the VIM, the VIM to allocate the resource required by the base station, and configure the allocated resource for the base station, to perform congestion control on the base station.

With reference to the fourth aspect, in a first possible implementation of the fourth aspect, the processor is configured to determine, according to the resource parameter, the resource size of the resource required by the base station; and
the transceiver is further configured to: send a resource allocation request message to the VIM according to the identification information of the VIM, where the resource allocation request message carries the resource size, and the resource allocation request message is used to request the VIM to allocate the resource according to the resource size; and receive the allocated resource sent by the VIM.

With reference to the fourth aspect or the first possible implementation of the fourth aspect, in a second possible implementation of the fourth aspect, the resource parameter is the resource size of the resource required by the base station or a traffic volume of services, to which no resources are allocated, in the base station.

With reference to the fourth aspect, the first possible implementation of the fourth aspect, or the second possible implementation of the fourth aspect, in a third possible implementation of the fourth aspect,
the transceiver is further configured to: receive a scaling failure message sent by the NFVO, where the scaling failure message carries a resource insufficiency indication, and the scaling failure message is sent when the NFVO determines that there is no VIM capable of providing the resource required by the base station; and send the scaling failure message to the base station, where the resource insufficiency indication is used to instruct the base station to request a policy and charging rules function PCRF to perform congestion control.

With reference to any one of the fourth aspect or the first to the third possible implementations of the fourth aspect, in a fourth possible implementation of the fourth aspect,
the transceiver is further configured to send an upgrade message to the NFVO, where the upgrade message carries identification information of the allocated resource, identification information of the base station, and the identification information of the VIM, and the upgrade message is used to request the NFVO to associate the identification information of the allocated resource, the identification information of the base station, and the identification information of the VIM.

According to a fifth aspect, the present invention provides a network element device, where the network element device includes a transceiver and a processor;
the transceiver is configured to receive a scaling request message, where the scaling request message carries a resource parameter used to represent a size of a resource required by a base station encountering congestion;
the processor is configured to determine, according to the resource parameter, a virtualized infrastructure manager VIM capable of providing the resource required by the base station; and
the transceiver is further configured to send a resource reservation success message to a virtualized network function manager VNFM, where the resource reservation success message carries identification information of the VIM, and the resource reservation success message is used to instruct the VNFM to request, according to the identification information of the VIM, the VIM to allocate the resource required by the base station, and to instruct the VNFM to configure the allocated resource for the base station.

With reference to the fifth aspect, in a first possible implementation of the fifth aspect,
the processor is configured to: determine, according to the resource parameter, the resource size of the resource required by the base station; query, in a correspondence between a VIM and a quantity of idle resources, whether a VIM whose quantity of idle resources is greater than or equal to the resource size exists; and if the VIM exists, determine the VIM whose quantity of idle resources is greater than or equal to the resource size as the VIM capable of providing the resource required by the base station.

With reference to the fifth aspect or the first possible implementation of the fifth aspect, in a second possible implementation of the fifth aspect,:
the transceiver is further configured to: if it is determined that there is no VIM capable of providing the resource required by the base station, send a scaling failure message to the VNFM, where the scaling failure message carries a resource insufficiency indication, the scaling failure message is used to request the VNFM to send the scaling failure message to the base station, and the resource insufficiency indication is used to instruct the base station to request a policy and charging rules function PCRF to perform congestion control.

With reference to the fifth aspect, the first possible implementation of the fifth aspect, or the second possible implementation of the fifth aspect, in a third possible implementation of the fifth aspect,
the transceiver is further configured to: send a resource reservation request message to the VIM, where the resource reservation request message carries the size of the resource required by the base station, and the resource reservation request message is used to request the VIM to determine, according to the resource size, whether the VIM is capable of providing the resource required by the base station; and receive a resource reservation success message that is sent when the VIM determines that the VIM is capable of providing the resource required by the base station.

With reference to any one of the fifth aspect or the first to the third possible implementations of the fifth aspect, in a fourth possible implementation of the fifth aspect,
the transceiver is further configured to receive an upgrade message sent by the VNFM, where the upgrade message carries identification information of the allocated resource, identification information of the base station, and the identification information of the VIM; and
the processor is further configured to associate the identification information of the allocated resource, the identification information of the base station, and the identification information of the VIM.

With reference to any one of the fifth aspect or the first to the fourth possible implementations of the fifth aspect, in a fifth possible implementation of the fifth aspect,
the resource parameter is the resource size of the resource required by the base station or a traffic volume of services, to which no resources are allocated, in the base station.

According to a sixth aspect, the present invention provides a network element device, where the network element device includes a processor and a transceiver;
the transceiver is configured to: when the processor detects that a base station encounters congestion, send a scaling request message to a virtualized network function manager VNFM, where the scaling request message carries a resource parameter used to represent a size of a resource required by the base station, and the scaling request message is used to request the VNFM to allocate, according to the resource parameter, the resource required by the base station; and
the processor is configured to: if the allocated resource that is sent by the VNFM when the resource is successfully allocated is received, run a service according to the allocated resource, to perform congestion control.

With reference to the sixth aspect, in a first possible implementation of the sixth aspect,
the processor is further configured to: if a scaling failure message that is sent by the VNFM when the resource is unsuccessfully allocated is received, request, according to an indication of the scaling failure message, a policy and charging rules function PCRF to perform congestion control on the base station.

With reference to the sixth aspect or the first possible implementation of the sixth aspect, in a second possible implementation of the sixth aspect,
the transceiver is configured to: send a radio access network RAN user plane congestion indication to the PCRF, and receive a resource control indication RCI rule that is sent by the PCRF according to the RAN user plane congestion indication; and send the scaling request message to the VNFM according to the RCI rule.

In the embodiments of the present invention, when the base station encounters congestion, scaling is first performed for a resource of the base station, and if the scaling succeeds, flows of transmitted services do not need to be limited or a service transmission bit rate does not need to be reduced. Therefore, the base station can use a resource to ensure a normal service request from a user and to improve service transmission quality. If the scaling fails, the base station requests the PCRF to perform congestion control. This ensures that congestion control can be successfully performed.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a network architecture according to an embodiment of the present invention;
FIG. 2 is a flowchart of a congestion control method according to an embodiment of the present invention;
FIG. 3A and FIG. 3B are a flowchart of a congestion control method according to another embodiment of the present invention;
FIG. 4A and FIG. 4B are a flowchart of a congestion control method according to another embodiment of the present invention;
FIG. 5A and FIG. 5B are a flowchart of a congestion control method according to another embodiment of the present invention;
FIG. 6 is a flowchart of a congestion control method according to another embodiment of the present invention;
FIG. 7 is a flowchart of a congestion control method according to another embodiment of the present invention;
FIG. 8 is a schematic structural diagram of a congestion control apparatus according to an embodiment of the present invention;
FIG. 9 is a schematic structural diagram of a congestion control apparatus according to another embodiment of the present invention;
FIG. 10 is a schematic structural diagram of a congestion control apparatus according to another embodiment of the present invention;
FIG. 11 is a schematic structural diagram of a network element device according to an embodiment of the present invention;
FIG. 12 is a schematic structural diagram of a network element device according to another embodiment of the present invention; and
FIG. 13 is a schematic structural diagram of a network element device according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

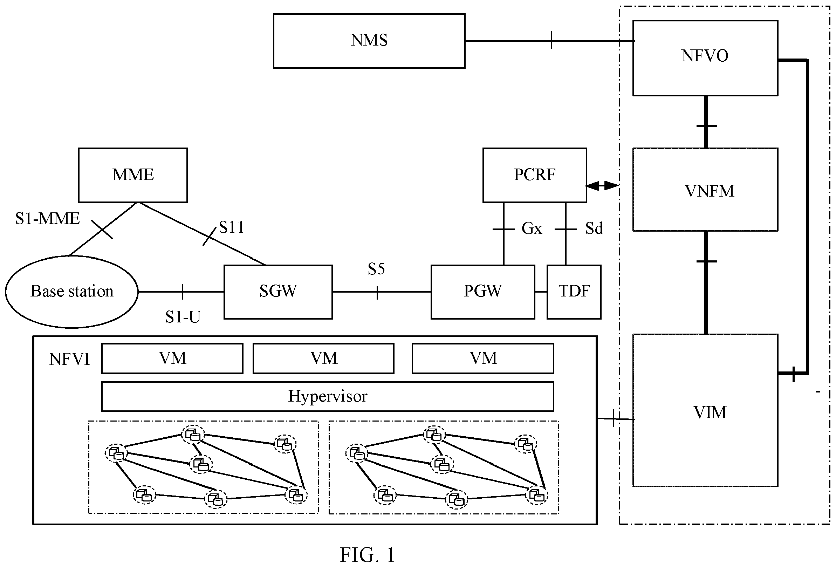

Referring to FIG. 1, FIG. 1 is an architectural diagram of an NFV network applied to an embodiment of the present invention. The network architecture includes network elements, such as a base station, an MME (Mobile Management Entity, mobility management entity), an SGW (Serving Gateway, serving gateway), a PGW (PDN Gateway, PDN (Public Data Network, public data network) gateway), a PCRF, a TDF (Traffic Detection Function, traffic detection function), a VNFM (VNF Manager, VNF (Virtualised Network Function, virtualized network function) manager), an NFVO (Network Functions Virtualization Orchestrator, network functions virtualization orchestrator), and a VIM (Virtualization Infrastructure Manager, virtualized infrastructure manager). In this embodiment of the present invention, the base station may be an eNB.

In the NFV network, the PCRF is configured to perform congestion control on the base station when the base station encounters congestion. The VNFM is configured to manage a hardware resource in the NFV network. The VIM is configured to manage a software resource in the NFV network. The software resource may be a VM (Virtual Machine, virtual machine). The NFVO is configured to manage each VIM in the NFV network and a resource in each VIM. The TDF may be built in the PGW, or may be built outside the PGW, and is used to perform DPI (Deep Packet Inspection, deep packet inspection) and policy control in the network.

Further, referring to FIG. 1, the network architecture may further include an NMS (Network Management System, network management system). The NMS is configured to help the VNFM manage the hardware resource in the NFV network. The NMS may be integrated in the VNFM, and is a function module in the VNFM, or may be a device separate from the VNFM.

Referring to FIG. 1, an architecture system including a hardware resource, a virtual resource, and a virtual layer in the NFV network is referred to as an NFVI (Network Function Virtulization Infrastructure, network functions virtualization infrastructure). For example, referring to FIG. 1, the topmost layer of the NFVI is virtual resources, and the virtual resources may be VMs. The bottom layer is hardware resources (a topology including hardware devices is in a dashed line box). A hypervisor (hypervisor) located at an intermediate layer is a virtual layer, and is used to coordinate the hardware devices and the VMs, for example, allocate hardware resources such as a memory, a CPU (Central Processing Unit, central processing unit), and a magnetic disk to the VMs on the hardware devices.

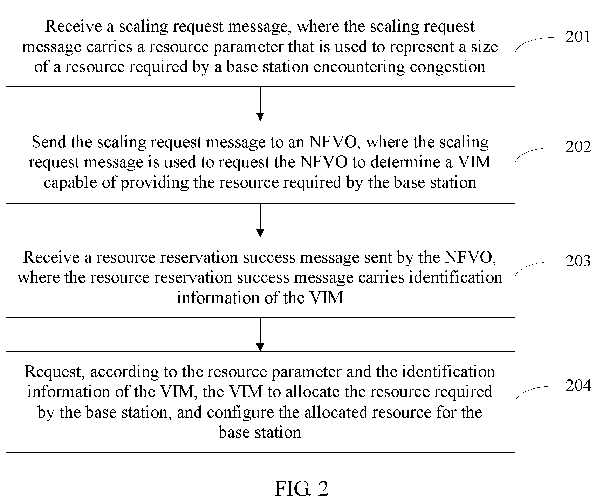

Referring to FIG. 2, an embodiment of the present invention provides a congestion control method. This method is performed by a VNFM, and includes:
Step 201: Receive a scaling request message, where the scaling request message carries a resource parameter that is used to represent a size of a resource required by a base station encountering congestion.

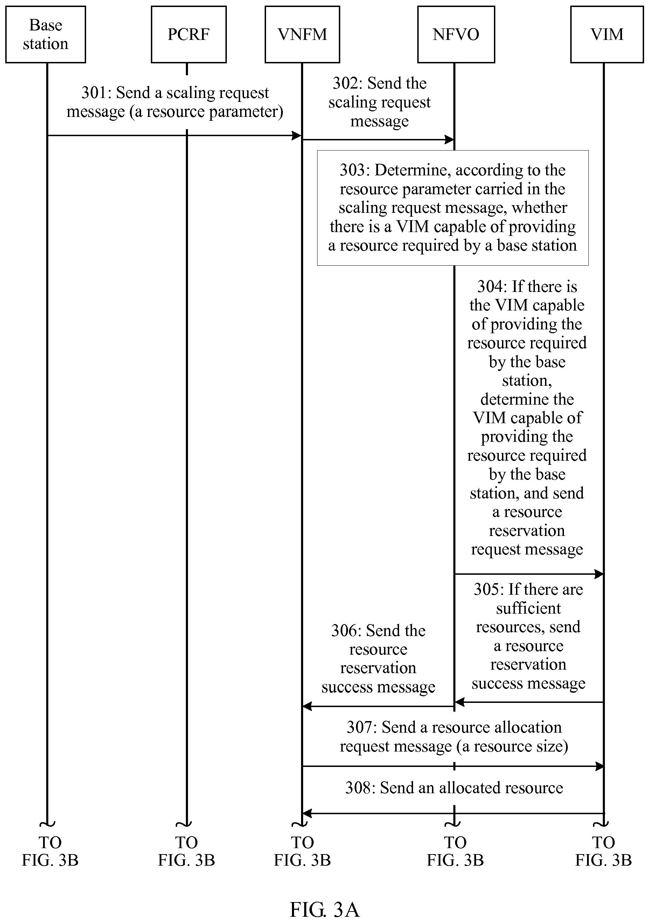

How the VNFM receives the scaling request message is to be specifically described with reference to embodiments in FIG. 3A and FIG. 3B, FIG. 4A and FIG. 4B, and FIG. 5A and FIG. 5B.

Step 202: Send the scaling request message to an NFVO, where the scaling request message is used to request the NFVO to determine a VIM capable of providing the resource required by the base station.

Step 203: Receive a resource reservation success message sent by the NFVO, where the resource reservation success message carries identification information of the VIM.

Step 204: Request, according to the resource parameter and the identification information of the VIM, the VIM to allocate the resource required by the base station, and configure the allocated resource for the base station, to perform congestion control on the base station.

Optionally, the NFVO manages each VIM in an NFV network and a resource in each VIM. Therefore, for ease of management performed by the NFVO, after the allocated resource is configured for the base station, an upgrade message may be further sent to the NFVO. The upgrade message carries identification information of the resource, identification information of the base station, and the identification information of the VIM, to request the NFVO to associate the identification information of the resource, the identification information of the base station, and the identification information of the VIM.

In this embodiment of the present invention, the scaling request message is received. The scaling request message carries the resource parameter that is used to represent the size of the resource required by the base station encountering congestion. Scaling is first performed for the resource of the base station according to the resource parameter. If the scaling succeeds, the resource for which scaling is performed is configured for the base station. In this case, the base station does not need to limit flows of transmitted services or does not need to reduce a service transmission bit rate. Therefore, the base station can use a resource to ensure a normal service request from a user and to improve service transmission quality, and QoE (Quality of Experience, quality of experience) of the user is improved.

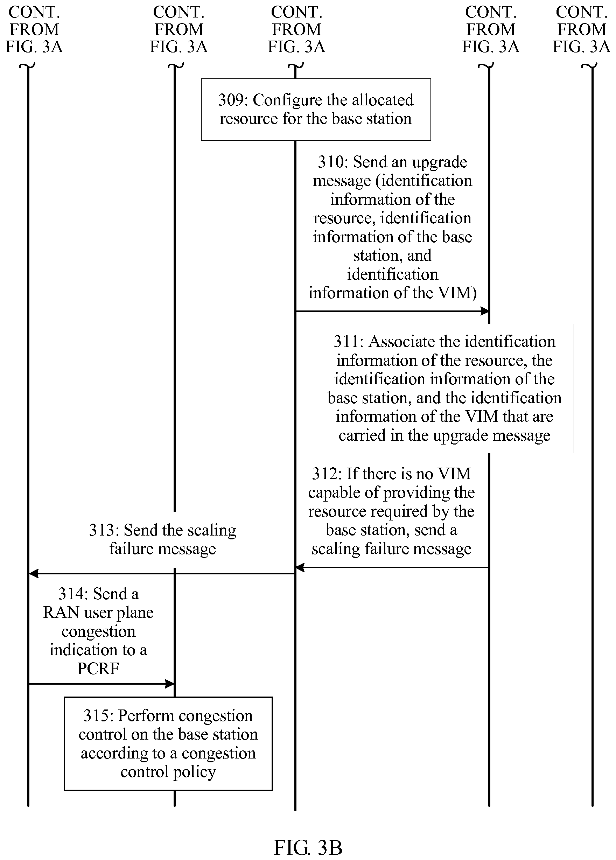

Referring to FIG. 3A and FIG. 3B, an embodiment of the present invention provides a congestion control method. The congestion control method includes the following steps.

Step 301: When a base station encounters congestion, the base station sends a scaling request message to a VNFM, where the scaling request message carries a resource parameter that is used to represent a size of a resource required by the base station.

The resource parameter may be the resource size of the resource required by the base station or a traffic volume of services, to which no resources are allocated, in the base station. When a large quantity of users request services from the base station, the base station may not have sufficient resources to allocate to the services, causing the base station to encounter congestion. The base station may calculate a size of a required resource according to a traffic volume of services to which no resources are allocated, sends, to the VNFM, a scaling request message carrying the resource size, and requests the VNFM to perform congestion control. Alternatively, the base station sends, to the VNFM, a scaling request message carrying the traffic volume of the services to which no resources are allocated, and requests the VNFM to perform congestion control.

In this embodiment, the resource requested by the base station may be a VM, and the scaling request message is a scaling request in English.

Step 302: The VNFM receives the scaling request message, and sends the scaling request message to an NFVO.

Step 303: The NFVO receives the scaling request message, and determines, according to the resource parameter carried in the scaling request message, whether there is a VIM capable of providing the resource required by the base station.

The NFV network includes multiple VIMs, each VIM has a large quantity of resources, and a VIM may allocate, to a network element in an NFV network, a resource used to transmit a service. The NFVO is configured to manage each VIM in the NFV network. A quantity of remaining idle resources in each VIM are stored in the NFVO. That is, a correspondence between a VIM and a quantity of idle resources are stored in the NFVO.

This step may be: The NFVO receives the scaling request message; determines, according to the resource parameter carried in the scaling request message, the resource size of the resource required by the base station; queries, in the correspondence between a VIM and a quantity of idle resources, whether a VIM whose quantity of idle resources is greater than or equal to the resource size exists; and if the VIM exists, determines that there is a VIM capable of providing the resource required by the base station; or if the VIM whose quantity of idle resources is greater than or equal to the resource size does not exist, determines that there is no VIM capable of providing the resource required by the base station.

If the resource parameter is a resource size, the NFVO directly uses the resource parameter as the resource size of the resource required by the base station. If the resource parameter is a traffic volume, the NFVO calculates, according to the traffic volume, the resource size of the resource required by the base station.

Step 304: If the NFVO determines that there is a VIM capable of providing the resource required by the base station, the NFVO determines the VIM capable of providing the resource required by the base station, and sends a resource reservation request message to the VIM, where the resource reservation request message carries the size of the resource required by the base station.

The NFVO may determine, from the correspondence between a quantity of idle resources and a VIM, a VIM whose quantity of idle resources is greater than or equal to the size of the resource required by the base station, and use the VIM as the VIM capable of providing the resource required by the base station. The quantity of idle resources in the VIM that are stored in the NFVO may be different from an actual quantity of idle resources in the VIM. Therefore, the VNFO may send the resource reservation request message to the determined VIM, to request the VIM to determine whether the VIM is capable of providing the resource required by the base station.

Step 305: The VIM receives the resource reservation request message, determines, according to the resource size carried in the resource reservation request message, whether there are sufficient resources, and if there are sufficient resources, sends a resource reservation success message to the NFVO.

The VIM may obtain a quantity of remaining idle resources of the VIM; and if the quantity of idle resources is greater than or equal to the resource size carried in the resource reservation request message, determine that there are sufficient resources; or if the quantity of idle resources is less than the resource size carried in the resource reservation request message, determine that there are no sufficient resources.

If there are no sufficient resources, the VIM sends a resource reservation failure message to the NFVO, and the NFVO receives the resource reservation failure message, and then may redetermine a VIM capable of providing the resource required by the base station.

Step 306: The NFVO receives the resource reservation success message, and sends the resource reservation success message to the VNFM, where the resource reservation success message carries identification information of the VIM.

After receiving the resource reservation success message, the NFVO may add the identification information of the VIM to the resource reservation success message, and then send, to the VNFM, the resource reservation success message to which the identification information of the VIM is added.

In this embodiment, after determining the VIM capable of providing the resource required by the base station, the NFVO may directly send the resource reservation success message to the VNFM, where the resource reservation success message carries the identification information of the VIM. In this case, the NFVO does not send the resource reservation request message to the determined VIM, to request the determined VIM for confirmation.

Step 307: The VNFM receives the resource reservation success message, and sends a resource allocation request message to the VIM according to the identification information, which is carried in the resource reservation success message, of the VIM, where the resource allocation request message carries the resource size of the resource required by the base station.

Before sending the resource allocation request message, the VNFM first determines, according to the resource parameter, the resource size of the resource required by the base station. Specifically, if the resource parameter is a resource size, the VNFM directly uses the resource parameter as the resource size of the resource required by the base station. If the resource parameter is a traffic volume, the VNFM calculates, according to the traffic volume, the resource size of the resource required by the base station.

Step 308: The VIM receives the resource allocation request message, allocates the resource according to the resource size carried in the resource allocation request message, and sends the allocated resource to the VNFM.

In this embodiment of the present invention, the resource allocated by the VIM is a VM, and may be transmitted in the NFV network.

Step 309: The VNFM receives the resource allocated by the VIM, and configures the resource for the base station, so as to perform congestion control on the base station.

It should be noted that, the scaling request message sent by the base station carries identification information of the base station, and the VNFM may send the resource to the base station according to the identification information of the base station; the base station receives the resource, and allocates the resource to a service to which no resource is allocated. The service is run by using the resource, so as to configure the resource for the base station.

The VNFM configures, for the base station, the resource allocated by the VIM, so that the base station has sufficient resources to transmit services. Therefore, congestion encountered by the base station is resolved, and congestion control is performed. The resource is allocated to the base station, so that the base station has sufficient resources to transmit services. Compared with congestion control means such as limiting service flows or reducing a service transmission bit rate, QoE of a user is greatly improved.

Step 310: The VNFM sends an upgrade message to the NFVO, where the upgrade message carries identification information of the allocated resource, the identification information of the base station, and the identification information of the VIM.

In this embodiment, if the resource is a VM, the identification information of the resource is identification information of the VM.

Step 311: The NFVO receives the upgrade message, associates the identification information of the resource, the identification information of the base station, and the identification information of the VIM that are carried in the upgrade message, and the operation ends.

The NFVO manages each VIM in the entire NFV network and a resource in each VIM. Therefore, the NFVO needs to associate the identification information of the resource, the identification information of the base station, and the identification information of the VIM that are carried in the upgrade message.

The NFVO may further subtract, from the quantity of idle resources of the VIM according to the correspondence between a VIM and a quantity of idle resources, the resource size of the resource required by the base station.

Step 312: If the NFVO determines that there is no VIM capable of providing the resource required by the base station, the NFVO sends a scaling failure message to the VNFM, where the scaling failure message carries a resource insufficiency indication.

Step 313: The VNFM receives the scaling failure message, and sends the scaling failure message to the base station.

Step 314: The base station receives the scaling failure message, and sends a RAN user plane congestion indication to a PCRF.

The RAN user plane congestion indication may further carry scaling failure indication information.

This step may be: The base station sends the RAN user plane congestion indication to an MME. The MME receives the RAN user plane congestion indication, and sends the RAN user plane congestion indication to an SGW. The SGW receives the RAN user plane congestion indication, sends a response message of the user plane congestion indication to the MME, and sends the RAN user plane congestion indication to the PGW. The PGW receives the RAN user plane congestion indication, sends a response message of the user plane congestion indication to the SGW, and sends the RAN user plane congestion indication to the PCRF.

Step 315: The PCRF receives the RAN user plane congestion indication, and performs congestion control on the base station according to a congestion control policy.

The PCRF determines, according to the scaling failure indication information carried in the RAN user plane congestion indication, that the base station fails to request to perform scaling, and then performs congestion control on the base station by using the congestion control policy. For example, the congestion control policy may be limiting flows for the base station, that is, preventing a new user from accessing the base station and requesting a service from the base station. For another example, the congestion control policy may be reducing a service transmission bit rate, for example, controlling the base station to degrade, as a standard-definition service, a high-definition service that is being transmitted.

In this embodiment of the present invention, when the base station encounters congestion, the base station first requests the VNFM to perform scaling for the resource of the base station, and if the scaling succeeds, does not need to limit flows of transmitted services or does not need to reduce a service transmission bit rate. Therefore, the base station can use a resource to ensure a normal service request from a user and to improve service transmission quality, and QoE of the user is improved. If the scaling fails, the base station requests the PCRF to perform congestion control.

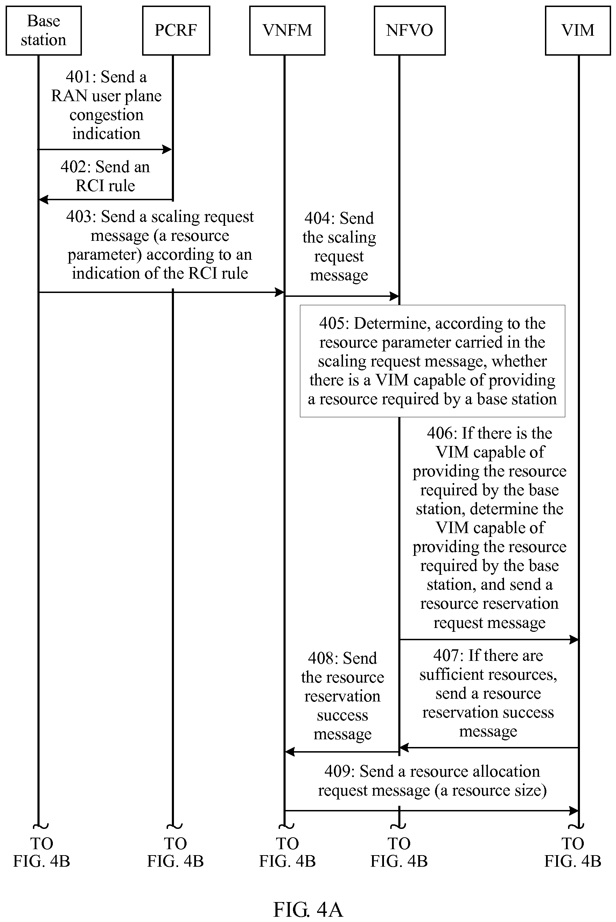

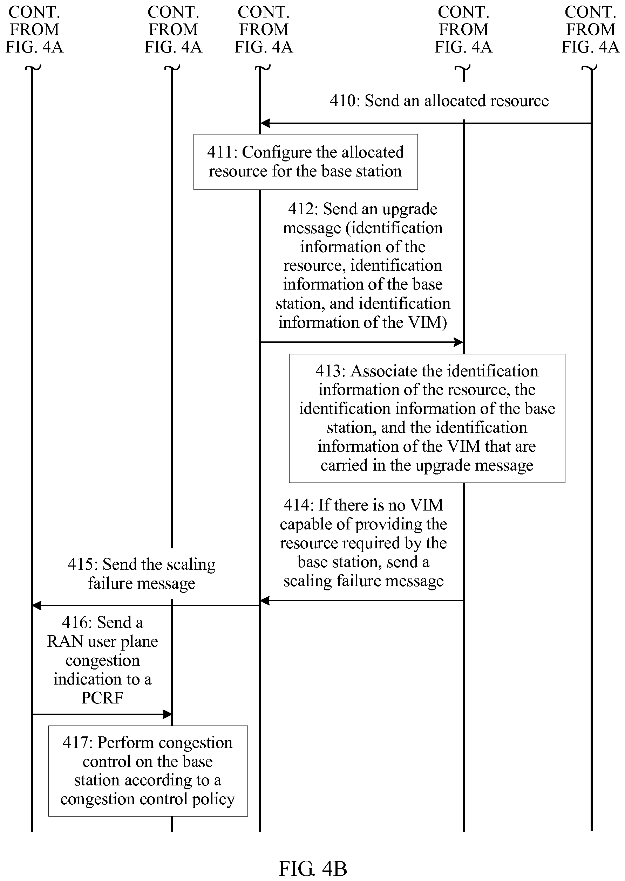

Referring to FIG. 4A and FIG. 4B, an embodiment of the present invention provides a congestion control method. The congestion control method includes the following steps.

Step 401: When a base station encounters congestion, the base station sends a RAN user plane congestion indication to a PCRF.

For a specific process in which the base station sends the RAN user plane congestion indication to the PCRF, refer to content related to step 314 in FIG. 3A and FIG. 3B. Details are not described herein again.

When a large quantity of users request services from the base station, the base station may not have sufficient resources to allocate to the services, causing the base station to encounter congestion. When the congestion occurs, the base station starts to perform this step.

Step 402: The PCRF receives the RAN user plane congestion indication, and sends an RCI (Resource control indication, resource control indication) rule to the base station, where the RCI rule is used to instruct the base station to request a VNFM to perform scaling for the resource.

Step 403: The base station receives the RCI rule, and sends a scaling request message to the VNFM according to the RCI rule, where the scaling request message carries a resource parameter that is used to represent a size of a resource required by the base station.

The resource parameter may be the resource size of the resource required by the base station or a traffic volume of services, to which no resources are allocated, in the base station. The base station may calculate a size of a required resource according to a traffic volume of services to which no resources are allocated, sends, to the VNFM, a scaling request message carrying the resource size, and requests the VNFM to perform congestion control. Alternatively, the base station sends, to the VNFM, a scaling request message carrying the traffic volume of the services to which no resources are allocated, and requests the VNFM to perform congestion control.

In this embodiment, the resource requested by the base station may be a VM, and the scaling request message is a scaling request in English.

Step 404 to step 415 are respectively the same as step 302 to step 313 in FIG. 3A and FIG. 3B, and are not described herein in detail again.

Step 416: The base station receives the scaling failure message sent by the VNFM, and sends the scaling failure message to the PCRF.

Optionally, the scaling failure message may further carry scaling failure indication information.

Step 417: The PCRF receives the scaling failure message, and performs congestion control on the base station according to a congestion control policy.

The PCRF determines, according to the scaling failure indication information carried in the scaling failure message, that the base station fails to request to perform scaling, and then performs congestion control on the base station by using the congestion control policy.

In this embodiment of the present invention, when the base station encounters congestion, the base station requests the PCRF to perform congestion control; when determining that the base station has not requested the VNFM to perform scaling for the resource, the PCRF sends the RCI rule to the base station, and first instructs, by using the RCI rule, the base station to request the VNFM to perform scaling for the resource of the base station. If the scaling succeeds, flows of transmitted services do not need to be limited or a service transmission bit rate does not need to be reduced. Therefore, the base station can use a resource to ensure a normal service request from a user and to improve service transmission quality, and QoE of the user is improved. If the scaling fails, the PCRF performs congestion control on the base station.

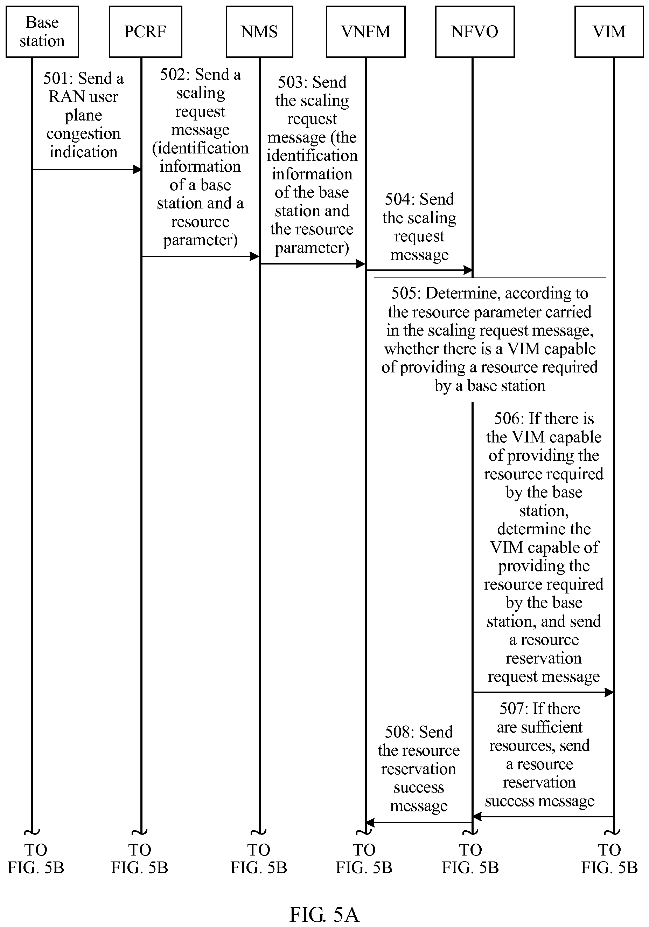

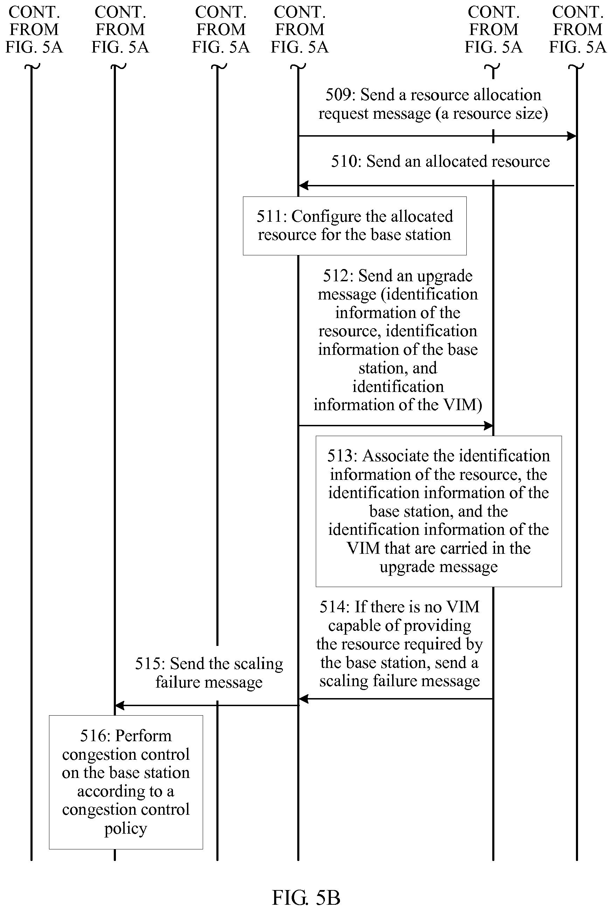

Referring to FIG. 5A and FIG. 5B, an embodiment of the present invention provides a congestion control method. The congestion control method includes the following steps.

Step 501: When a base station encounters congestion, the base station sends a RAN user plane congestion indication to a PCRF, where the RAN user plane congestion indication carries a resource parameter of a resource required by the base station.

The resource parameter may be the resource size of the resource required by the base station or a traffic volume of services, to which no resources are allocated, in the base station. When a large quantity of users request services from the base station, the base station may not have sufficient resources to allocate to the services, causing the base station to encounter congestion. The base station may calculate a size of a required resource according to a traffic volume of services to which no resources are allocated, sends, to the PCRF, a RAN user plane congestion indication carrying the resource size, and requests the PCRF to perform congestion control. Alternatively, the base station sends, to the PCRF, a scaling request message carrying the traffic volume of the services to which no resources are allocated, and requests the PCRF to perform congestion control.

For a specific process in which the base station sends the RAN user plane congestion indication to the PCRF, refer to content related to step 314 in FIG. 3A and FIG. 3B. Details are not described herein again.

Step 502: The PCRF receives the RAN user plane congestion indication, and sends a scaling request message to an NMS (Network Management System, network management system), where the scaling request message carries identification information of the base station and the resource parameter that is used to represent the size of the resource required by the base station.

In this embodiment, the resource requested by the base station may be a VM, and the scaling request message is a scaling request in English.

Step 503: The NMS receives the scaling request message, and sends the scaling request message to a VNFM, where the scaling request message carries the identification information of the base station and the size of the resource required by the base station.

After receiving the scaling request message, the NMS determines, according to the resource parameter carried in the scaling request message, the size of the resource required by the base station, and then replaces, with the resource size, the resource parameter carried in the scaling request message. A process in which the NMS determines, according to the resource parameter, the size of the resource required by the base station may be: If the resource parameter is a resource size, the NMS directly uses the resource parameter as the size of the resource required by the base station. If the resource parameter is a traffic volume, the NMS calculates, according to the traffic volume, the size of the resource required by the base station.

Step 504 to step 514 are respectively the same as step 302 to step 312 in FIG. 3A and FIG. 3B, and are not described herein in detail again.

Step 515: The VNFM receives a scaling failure message sent by an NFVO, and sends the scaling failure message to the PCRF.

The VNFM may further send the scaling failure message to the NMS. The scaling failure message may further carry a resource insufficiency indication.

Step 516: The PCRF receives the scaling failure message, and performs congestion control on the base station according to a congestion control policy.

The PCRF determines, according to the resource insufficiency indication carried in the scaling failure message, that the base station fails to request to perform scaling, and then performs congestion control on the base station by using the congestion control policy.

In this embodiment of the present invention, when the base station encounters congestion, the base station requests the PCRF to perform congestion control; when determining that the base station has not requested the VNFM to perform scaling for the resource, the PCRF first requests the VNFM to perform scaling for the resource of the base station. If the scaling succeeds, the base station does not need to limit flows of transmitted services or does not need to reduce a service transmission bit rate. Therefore, the base station can use a resource to ensure a normal service request from a user and to improve service transmission quality, and QoE of the user is improved. If the scaling fails, the PCRF performs congestion control on the base station.

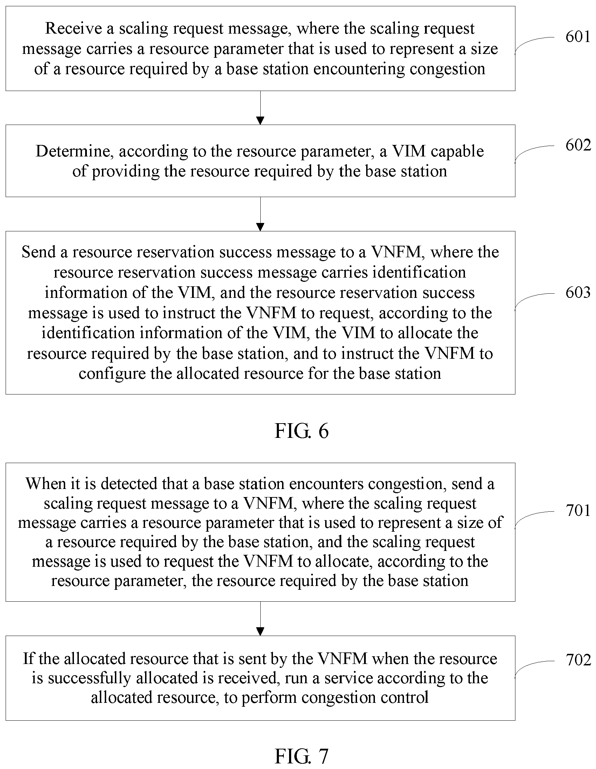

Referring to FIG. 6, an embodiment of the present invention provides a congestion control method. This method is performed by an NFVO, and includes:
Step 601: Receive a scaling request message, where the scaling request message carries a resource parameter that is used to represent a size of a resource required by a base station encountering congestion.

How the NFVO receives the scaling request message is to be specifically described with reference to the embodiments in FIG. 3A and FIG. 3B, FIG. 4A and FIG. 4B, and FIG. 5A and FIG. 5B.

Step 602: Determine, according to the resource parameter, a VIM capable of providing the resource required by the base station.

Step 603: Send a resource reservation success message to a VNFM, where the resource reservation success message carries identification information of the VIM, and the resource reservation success message is used to instruct the VNFM to request, according to the identification information of the VIM, the VIM to allocate the resource required by the base station, and to instruct the VNFM to configure the allocated resource for the base station.

Optionally, in step 602, when the VIM is determined, a resource reservation request message may be sent to the VIM, where the resource reservation request message carries the resource size of the resource required by the base station, and the resource reservation request message is used to request the VIM to determine, according to the resource size, whether the VIM is capable of providing the resource required by the base station; the resource reservation success message that is sent when the VIM determines that the VIM is capable of providing the resource required by the base station is received, and the resource reservation success message is then sent to the VNFM.

A quantity, which is recorded in the NFVO, of idle resources in the VIM is different from an actual quantity of idle resources in the VIM. Therefore, to successfully allocate the resource to the base station, the resource reservation request message is sent to the VIM, to request the VIM for confirmation.

Optionally, after step 603, an upgrade message sent by the VNFM may be further received, where the upgrade message carries identification information of the resource allocated by the VIM, identification information of the base station, and the identification information of the VIM, and the identification information of the resource allocated by the VIM, the identification information of the base station, and the identification information of the VIM that are carried in the upgrade message are associated. The VNFM needs to manage each VIM in the NFV network and a resource in each VIM. Therefore, the identification information of the resource allocated by the VIM, the identification information of the base station, and the identification information of the VIM are associated. This facilitates management performed by the VNFM.

In this embodiment of the present invention, when the base station encounters congestion, the scaling request message is received, where the scaling request message carries the resource parameter that is used to represent the size of the resource required by the base station; the VIM capable of providing the resource required by the base station is determined according to the resource parameter; and then, the VNFM and the VIM are instructed to first perform scaling for the resource of the base station. In this case, the base station does not need to limit flows of transmitted services or does not need to reduce a service transmission bit rate, so as to improve QoE of a user. If the scaling fails, the base station requests the PCRF to perform congestion control.

Referring to FIG. 7, an embodiment of the present invention provides a congestion control method. This method is performed by a base station, and includes:
Step 701: When it is detected that the base station encounters congestion, send a scaling request message to a VNFM, where the scaling request message carries a resource parameter that is used to represent a size of a resource required by the base station, and the scaling request message is used to request the VNFM to allocate, according to the resource parameter, the resource required by the base station.

How the base station sends the scaling request message to the VNFM is to be specifically described with reference to the embodiments in FIG. 3A and FIG. 3B, FIG. 4A and FIG. 4B, and FIG. 5A and FIG. 5B.

Step 702: If the allocated resource that is sent by the VNFM when the resource is successfully allocated is received, run a service according to the allocated resource, to perform congestion control.

Optionally, the method further includes: if a scaling failure message that is sent by the VNFM when the resource is unsuccessfully allocated is received, requesting, according to an indication of the scaling failure message, a PCRF to perform congestion control on the base station.

In this embodiment of the present invention, when the base station encounters congestion, the base station first requests the VNFM to perform scaling for the resource of the base station, and if the scaling succeeds, the PCRF does not need to be requested to limit flows of transmitted services or reduce a service transmission bit rate. Therefore, QoE of a user is improved. If the scaling fails, the base station requests the PCRF to perform congestion control.

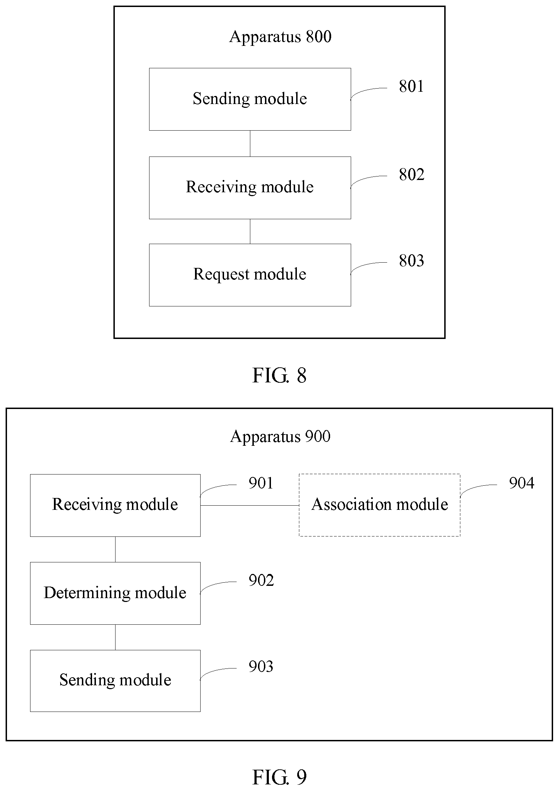

Referring to FIG. 8, an embodiment of the present invention provides a congestion control apparatus 800. The congestion control apparatus 800 includes:
a receiving module 801, configured to receive a scaling request message, where the scaling request message carries a resource parameter that is used to represent a size of a resource required by a base station encountering congestion;
a sending module 802, configured to send the scaling request message to a network functions virtualization orchestrator NFVO, where the scaling request message is used to request the NFVO to determine a virtualized infrastructure manager VIM capable of providing the resource required by the base station, where
the receiving module 801 is further configured to receive a resource reservation success message sent by the NFVO, where the resource reservation success message carries identification information of the VIM; and
a request module 803, configured to: request, according to the resource parameter and the identification information of the VIM, the VIM to allocate the resource required by the base station, and configure the allocated resource for the base station, to perform congestion control on the base station.

Optionally, the request module 803 is configured to determine, according to the resource parameter, the resource size of the resource required by the base station;
the sending module 802 is further configured to send a resource allocation request message to the VIM according to the identification information of the VIM, where the resource allocation request message carries the resource size, and the resource allocation request message is used to request the VIM to allocate the resource according to the resource size; and
the receiving module 801 is further configured to receive the allocated resource sent by the VIM.

The resource parameter is the resource size of the resource required by the base station or a traffic volume of services, to which no resources are allocated, in the base station.

Optionally, the receiving module 801 is further configured to receive a scaling failure message sent by the NFVO, where the scaling failure message carries a resource insufficiency indication, and the scaling failure message is sent when the NFVO determines that there is no VIM capable of providing the resource required by the base station; and
the sending module 802 is further configured to send the scaling failure message to the base station, where the resource insufficiency indication is used to instruct the base station to request a policy and charging rules function PCRF to perform congestion control.

Optionally, the sending module 802 is further configured to send an upgrade message to the NFVO, where the upgrade message carries identification information of the allocated resource, identification information of the base station, and the identification information of the VIM, and the upgrade message is used to request the NFVO to associate the identification information of the allocated resource, the identification information of the base station, and the identification information of the VIM.

In this embodiment of the present invention, the scaling request message is received. The scaling request message carries the resource parameter that is used to represent the size of the resource required by the base station encountering congestion. Scaling is first performed for the resource of the base station according to the resource parameter. If the scaling succeeds, the resource for which scaling is performed is configured for the base station. In this case, the base station does not need to limit flows of transmitted services or does not need to reduce a service transmission bit rate. Therefore, the base station can use a resource to ensure a normal service request from a user and to improve service transmission quality, and QoE of the user is improved. If the scaling fails, the base station requests the PCRF to perform congestion control.

Referring to FIG. 9, an embodiment of the present invention provides a congestion control apparatus 900. The congestion control apparatus 900 includes:
a receiving module 901, configured to receive a scaling request message, where the scaling request message carries a resource parameter that is used to represent a size of a resource required by a base station encountering congestion;
a determining module 902, configured to determine, according to the resource parameter, a virtualized infrastructure manager VIM capable of providing the resource required by the base station; and
a sending module 903, configured to send a resource reservation success message to a virtualized network function manager VNFM, where the resource reservation success message carries identification information of the VIM, and the resource reservation success message is used to instruct the VNFM to request, according to the identification information of the VIM, the VIM to allocate the resource required by the base station, and to instruct the VNFM to configure the allocated resource for the base station.

Optionally, the determining module 902 is configured to: determine, according to the resource parameter, the resource size of the resource required by the base station; query, in a correspondence between a VIM and a quantity of idle resources, whether a VIM whose quantity of idle resources is greater than or equal to the resource size exists; and if the VIM exists, determine the VIM whose quantity of idle resources is greater than or equal to the resource size as the VIM capable of providing the resource required by the base station.

Optionally, the sending module 903 is further configured to: if it is determined that there is no VIM capable of providing the resource required by the base station, send a scaling failure message to the VNFM, where the scaling failure message carries a resource insufficiency indication, the scaling failure message is used to request the VNFM to send the scaling failure message to the base station, and the resource insufficiency indication is used to instruct the base station to request a policy and charging rules function PCRF to perform congestion control.

Optionally, the sending module 903 is further configured to send a resource reservation request message to the VIM, where the resource reservation request message carries the size of the resource required by the base station, and the resource reservation request message is used to request the VIM to determine, according to the resource size, whether the VIM is capable of providing the resource required by the base station; and
the receiving module 901 is further configured to receive a resource reservation success message that is sent when the VIM determines that the VIM is capable of providing the resource required by the base station.

Optionally, the receiving module 901 is further configured to receive an upgrade message sent by the VNFM, where the upgrade message carries identification information of the allocated resource, identification information of the base station, and the identification information of the VIM; and
the apparatus 900 further includes an association module 904, and the association module 904 is configured to associate the identification information of the allocated resource, the identification information of the base station, and the identification information of the VIM.

The resource parameter is the resource size of the resource required by the base station or a traffic volume of services, to which no resources are allocated, in the base station.

In this embodiment of the present invention, when the base station encounters congestion, the scaling request message is received, where the scaling request message carries the resource parameter that is used to represent the size of the resource required by the base station; the VIM capable of providing the resource required by the base station is determined according to the resource parameter; and then, the VNFM and the VIM are instructed to first perform scaling for the resource of the base station. In this case, the base station does not need to limit flows of transmitted services or does not need to reduce a service transmission bit rate, so as to improve QoE of a user. If the scaling fails, the base station requests the PCRF to perform congestion control.

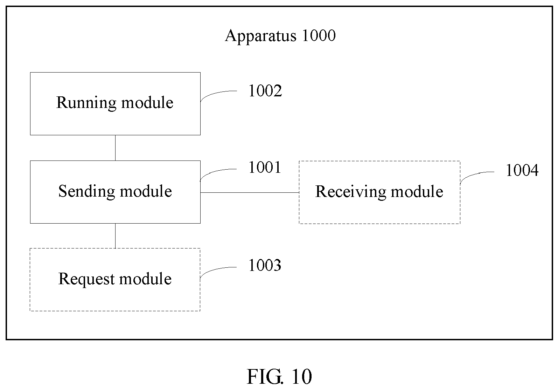

Referring to FIG. 10, FIG. 10 shows a congestion control apparatus 1000 according to an embodiment of the present invention. The congestion control apparatus 1000 includes:
a sending module 1001, configured to: when it is detected that a base station encounters congestion, send a scaling request message to a virtualized network function manager VNFM, where the scaling request message carries a resource parameter that is used to represent a size of a resource required by the base station, and the scaling request message is used to request the VNFM to allocate, according to the resource parameter, the resource required by the base station; and
a running module 1002, configured to: if the allocated resource that is sent by the VNFM when the resource is successfully allocated is received, run a service according to the allocated resource, to perform congestion control.

Further, the apparatus 1000 further includes:
a request module 1003, configured to: if a scaling failure message that is sent by the VNFM when the resource is unsuccessfully allocated is received, request, according to an indication of the scaling failure message, a policy and charging rules function PCRF to perform congestion control on the base station.

Further, the apparatus 1000 further includes a receiving module 1004.

The sending module 1001 is further configured to send a radio access network RAN user plane congestion indication to the PCRF.

The receiving module 1004 is configured to receive a resource control indication RCI rule that is sent by the PCRF according to the RAN user plane congestion indication.

Correspondingly, the sending module 1001 is configured to send the scaling request message to the VNFM according to the RCI rule.

In this embodiment of the present invention, when the base station encounters congestion, the base station first requests the VNFM to perform scaling for the resource of the base station, and if the scaling succeeds, the PCRF does not need to be requested to limit flows of transmitted services or reduce a service transmission bit rate. Therefore, QoE of a user is improved. If the scaling fails, the base station requests the PCRF to perform congestion control.

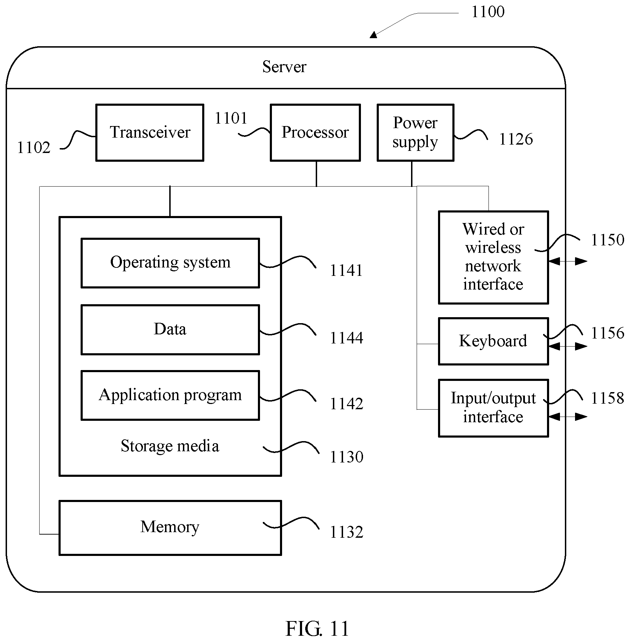

Referring to FIG. 11, FIG. 11 is a schematic structural diagram of a network element device according to an embodiment of the present invention. The network element device 1100 may cause a relatively great difference due to a different configuration or different performance, and may include one or more processors 1101, transceivers 1102, and memories 1132, and one or more storage media 1130 (for example, one or more mass storage devices) storing application programs 1142 or data 1144. The memories 1132 and the storage media 1130 may be configured for temporary storage or persistent storage. Programs stored in the storage media 1130 may include one or more modules (not marked in the figure), and each module may include a series of instruction operations on the network element device. Still further, the processor 1101 may be configured to: communicate with the storage media 1130, and perform, on the network element device 1100, a series of instruction operations that are in the storage media 1130.

The network element device 1100 may further include one or more power supplies 1126, one or more wired or wireless network interfaces 1150, one or more input/output interfaces 1158, one or more keyboards 1156, and/or one or more operating systems 1141, such as Windows ServerTM, Mac OS XTM, UnixTM, LinuxTM, and FreeBSDTM.

In the present invention, the processor 1101 and the transceiver 1102 of the network element device have the following functions.

The transceiver 1102 is configured to: receive a scaling request message, where the scaling request message carries a resource parameter that is used to represent a size of a resource required by a base station encountering congestion; send the scaling request message to a network functions virtualization orchestrator NFVO, where the scaling request message is used to request the NFVO to determine a virtualized infrastructure manager VIM capable of providing the resource required by the base station; and receive a resource reservation success message sent by the NFVO, where the resource reservation success message carries identification information of the VIM.

The processor 1101 is configured to: request, according to the resource parameter and the identification information of the VIM, the VIM to allocate the resource required by the base station, and configure the allocated resource for the base station, to perform congestion control on the base station.

Optionally, the processor 1101 is configured to determine, according to the resource parameter, the resource size of the resource required by the base station.

The transceiver 1102 is further configured to: send a resource allocation request message to the VIM according to the identification information of the VIM, where the resource allocation request message carries the resource size, and the resource allocation request message is used to request the VIM to allocate the resource according to the resource size; and receive the allocated resource sent by the VIM.

Optionally, the resource parameter is the resource size of the resource required by the base station or a traffic volume of services, to which no resources are allocated, in the base station.

Optionally, the transceiver 1101 is further configured to: receive a scaling failure message sent by the NFVO, where the scaling failure message carries a resource insufficiency indication, and the scaling failure message is sent when the NFVO determines that there is no VIM capable of providing the resource required by the base station; and send the scaling failure message to the base station, where the resource insufficiency indication is used to instruct the base station to request a policy and charging rules function PCRF to perform congestion control.

Optionally, the transceiver 1102 is further configured to send an upgrade message to the NFVO, where the upgrade message carries identification information of the allocated resource, identification information of the base station, and the identification information of the VIM, and the upgrade message is used to request the NFVO to associate the identification information of the allocated resource, the identification information of the base station, and the identification information of the VIM.

The network element device provided in this embodiment of the present invention may be a VNFM.

In this embodiment of the present invention, the scaling request message is received. The scaling request message carries the resource parameter that is used to represent the size of the resource required by the base station encountering congestion. Scaling is first performed for the resource of the base station according to the resource parameter. If the scaling succeeds, the resource for which scaling is performed is configured for the base station. In this case, the base station does not need to limit flows of transmitted services or does not need to reduce a service transmission bit rate. Therefore, the base station can use a resource to ensure a normal service request from a user and to improve service transmission quality, and QoE of the user is improved. If the scaling fails, the base station requests the PCRF to perform congestion control.

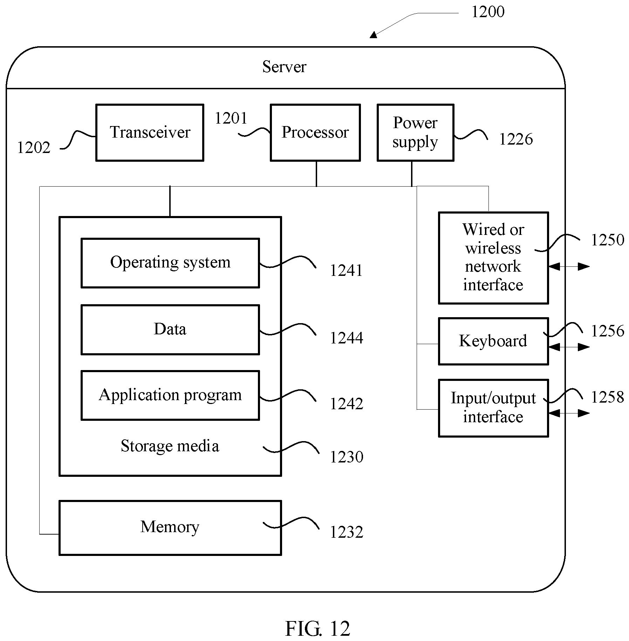

Referring to FIG. 12, FIG. 12 is a schematic structural diagram of a network element device according to an embodiment of the present invention. The network element device 1200 may cause a relatively great difference due to a different configuration or different performance, and may include one or more processors 1201, transceivers 1202, and memories 1232, and one or more storage media 1230 (for example, one or more mass storage devices) storing application programs 1242 or data 1244. The memories 1232 and the storage media 1230 may be configured for temporary storage or persistent storage. Programs stored in the storage media 1230 may include one or more modules (not marked in the figure), and each module may include a series of instruction operations on the network element device. Still further, the processor 1201 may be configured to: communicate with the storage media 1230, and perform, on the network element device 1200, a series of instruction operations that are in the storage media 1230.

The network element device 1200 may further include one or more power supplies 1226, one or more wired or wireless network interfaces 1250, one or more input/output interfaces 1258, one or more keyboards 1256, and/or one or more operating systems 1241, such as Windows ServerTM, Mac OS XTM, UnixTM, LinuxTM, and FreeBSDTM.

In the present invention, the processor 1201 and the transceiver 1202 of the network element device have the following functions.

The transceiver 1202 is configured to receive a scaling request message, where the scaling request message carries a resource parameter that is used to represent a size of a resource required by a base station encountering congestion.

The processor 1201 is configured to determine, according to the resource parameter, a virtualized infrastructure manager VIM capable of providing the resource required by the base station.

The transceiver 1202 is further configured to send a resource reservation success message to a virtualized network function manager VNFM, where the resource reservation success message carries identification information of the VIM, and the resource reservation success message is used to instruct the VNFM to request, according to the identification information of the VIM, the VIM to allocate the resource required by the base station, and to instruct the VNFM to configure the allocated resource for the base station.

Optionally, the processor 1201 is configured to: determine, according to the resource parameter, the resource size of the resource required by the base station; query, in a correspondence between a VIM and a quantity of idle resources, whether a VIM whose quantity of idle resources is greater than or equal to the resource size exists; and if the VIM exists, determine the VIM whose quantity of idle resources is greater than or equal to the resource size as the VIM capable of providing the resource required by the base station.

Optionally, the transceiver 1202 is further configured to: if it is determined that there is no VIM capable of providing the resource required by the base station, send a scaling failure message to the VNFM, where the scaling failure message carries a resource insufficiency indication, the scaling failure message is used to request the VNFM to send the scaling failure message to the base station, and the resource insufficiency indication is used to instruct the base station to request a policy and charging rules function PCRF to perform congestion control.

Optionally, the transceiver 1202 is further configured to: send a resource reservation request message to the VIM, where the resource reservation request message carries the size of the resource required by the base station, and the resource reservation request message is used to request the VIM to determine, according to the resource size, whether the VIM is capable of providing the resource required by the base station; and receive a resource reservation success message that is sent when the VIM determines that the VIM is capable of providing the resource required by the base station.

Optionally, the transceiver 1202 is further configured to receive an upgrade message sent by the VNFM, where the upgrade message carries identification information of the allocated resource, identification information of the base station, and the identification information of the VIM; and
the processor 1201 is further configured to associate the identification information of the allocated resource, the identification information of the base station, and the identification information of the VIM.

Optionally, the resource parameter is the resource size of the resource required by the base station or a traffic volume of services, to which no resources are allocated, in the base station.

The network element device provided in this embodiment of the present invention may be an NFVO.

In this embodiment of the present invention, when the base station encounters congestion, the NFVO may determine whether the VIM capable of providing the resource required by the base station exists; if the VIM exists, the VNFM requests the VIM to perform scaling for the resource of the base station. If the scaling succeeds, the base station does not need to limit flows of transmitted services or does not need to reduce a service transmission bit rate. Therefore, QoE of a user is improved. If the scaling fails, the base station requests the PCRF to perform congestion control.

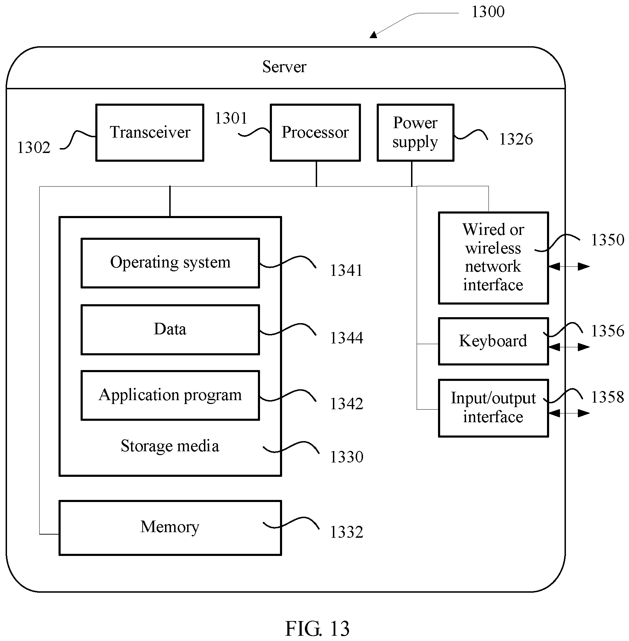

Referring to FIG. 13, FIG. 13 is a schematic structural diagram of a network element device according to an embodiment of the present invention. The network element device 1300 may cause a relatively great difference due to a different configuration or different performance, and may include one or more processors 1301, transceivers 1302, and memories 1332, and one or more storage media 1330 (for example, one or more mass storage devices) storing application programs 1342 or data 1344. The memories 1332 and the storage media 1330 may be configured for temporary storage or persistent storage. Programs stored in the storage media 1330 may include one or more modules (not marked in the figure), and each module may include a series of instruction operations on the network element device. Still further, the processor 1301 may be configured to: communicate with the storage media 1330, and perform, on the network element device 1300, a series of instruction operations that are in the storage media 1330.

The network element device 1300 may further include one or more power supplies 1326, one or more wired or wireless network interfaces 1350, one or more input/output interfaces 1358, one or more keyboards 1356, and/or one or more operating systems 1341, such as Windows ServerTM, Mac OS XTM, UnixTM, LinuxTM, and FreeBSDTM.

In the present invention, the processor 1301 and the transceiver 1302 of the network element device have the following functions.

The transceiver 1302 is configured to: when the processor detects that a base station encounters congestion, send a scaling request message to a virtualized network function manager VNFM, where the scaling request message carries a resource parameter that is used to represent a size of a resource required by the base station, and the scaling request message is used to request the VNFM to allocate, according to the resource parameter, the resource required by the base station.

The processor 1301 is configured to: if the allocated resource that is sent by the VNFM when the resource is successfully allocated is received, run a service according to the allocated resource, to perform congestion control.

Optionally, the processor 1301 is further configured to: if a scaling failure message that is sent by the VNFM when the resource is unsuccessfully allocated is received, request, according to an indication of the scaling failure message, a policy and charging rules function PCRF to perform congestion control on the base station.

Optionally, the transceiver 1302 is configured to: send a radio access network RAN user plane congestion indication to the PCRF, and receive a resource control indication RCI rule that is sent by the PCRF according to the RAN user plane congestion indication; and send the scaling request message to the VNFM according to the RCI rule.

The network element device provided in this embodiment of the present invention may be a base station.

In this embodiment of the present invention, when the base station encounters congestion, the base station first requests the VNFM to perform scaling for the resource of the base station, and if the scaling succeeds, the PCRF does not need to be requested to limit flows of transmitted services or reduce a service transmission bit rate. Therefore, QoE of a user is improved. If the scaling fails, the base station requests the PCRF to perform congestion control.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely example embodiments of the present invention, but are not intended to limit the present invention, whose scope is defined by the appended claims.

## Claims

1. A congestion control method by a virtualized network function manager, VNFM, wherein the method comprises:
receiving (201), by the VNFM, a scaling request message, wherein the scaling request message carries a resource parameter that is used to represent a size of a resource required by a base station encountering congestion;
sending (202), by the VNFM, the scaling request message to a network functions virtualization orchestrator, NFVO, wherein the scaling request message is used to request the NFVO to determine a virtualized infrastructure manager, VIM, capable of providing the resource required by the base station;
receiving (203), by the VNFM, a resource reservation success message from the NFVO, wherein the resource reservation success message carries identification information of the VIM; and
requesting (204), by the VNFM, according to the resource parameter and the identification information of the VIM, the VIM to allocate the resource required by the base station, and configuring the allocated resource for the base station, to perform congestion control on the base station.

2. The method according to claim 1, wherein the requesting, according to the resource parameter and the identification information of the VIM, the VIM to allocate the resource required by the base station comprises:
determining, by the VNFM, according to the resource parameter, the resource size of the resource required by the base station;
sending, by the VNFM, a resource allocation request message to the VIM according to the identification information of the VIM, wherein the resource allocation request message carries the resource size, and the resource allocation request message is used to request the VIM to allocate the resource according to the resource size; and
receiving, by the VNFM, the allocated resource from the VIM.

3. The method according to claim 1 or 2, wherein the resource parameter is the resource size of the resource required by the base station or a traffic volume of services, to which no resources are allocated, in the base station.

4. The method according to any one of claims 1 to 3, wherein the method further comprises:
Receiving, by the VNFM, a scaling failure message from the NFVO, wherein the scaling failure message carries a resource insufficiency indication, and the scaling failure message is sent when the NFVO determines that there is no VIM capable of providing the resource required by the base station; and
Sending, by the VNFM, the scaling failure message to the base station, wherein the resource insufficiency indication is used to instruct the base station to request a policy and charging rules function, PCRF, to perform congestion control.

5. A congestion control method by a network functions virtualization orchestrator, NFVO, wherein the method comprises:
receiving (601), by the NFVO, a scaling request message, wherein the scaling request message carries a resource parameter used to represent a size of a resource required by a base station encountering congestion;
determining (602), by the NFVO, according to the resource parameter, a virtualized infrastructure manager, VIM, capable of providing the resource required by the base station; and
sending (603), by the NFVO, a resource reservation success message to a virtualized network function manager, VNFM, wherein the resource reservation success message carries identification information of the VIM, and the resource reservation success message is used to instruct the VNFM to request, according to the identification information of the VIM, the VIM to allocate the resource required by the base station, and to instruct the VNFM to configure the allocated resource for the base station.

6. The method according to claim 5, wherein the determining, according to the resource parameter, a virtualized infrastructure manager VIM capable of providing the resource required by the base station comprises:
Determining, by the NFVO, according to the resource parameter, the resource size of the resource required by the base station;
querying, by the NFVO, in a correspondence between a VIM and a quantity of idle resources, whether a VIM whose quantity of idle resources is greater than or equal to the resource size exists; and
if the VIM exists, determining the VIM whose quantity of idle resources is greater than or equal to the resource size as the VIM capable of providing the resource required by the base station.

7. The method according to claim 5 or 6, wherein the method further comprises:
if it is determined that there is no VIM capable of providing the resource required by the base station, sending a scaling failure message to the VNFM, wherein the scaling failure message carries a resource insufficiency indication, the scaling failure message is used to request the VNFM to send the scaling failure message to the base station, and the resource insufficiency indication is used to instruct the base station to request a policy and charging rules function, PCRF, to perform congestion control.

8. The method according to any one of claims 5 to 7, before the sending a resource reservation success message to a virtualized network function manager VNFM, further comprising:
Sending, by the NFVO, a resource reservation request message to the VIM, wherein the resource reservation request message carries the size of the resource required by the base station, and the resource reservation request message is used to request the VIM to determine, according to the resource size, whether the VIM is capable of providing the resource required by the base station; and
receiving a resource reservation success message that is sent when the VIM determines that the VIM is capable of providing the resource required by the base station.

9. The method according to any one of claims 5 to 8, after the sending a resource reservation success message to a virtualized network function manager VNFM, further comprising:
Receiving, by the NFVO, an upgrade message from the VNFM, wherein the upgrade message carries identification information of the allocated resource, identification information of the base station, and the identification information of the VIM; and
Associating, by the NFVO, the identification information of the allocated resource, the identification information of the base station, and the identification information of the VIM.

10. A congestion control method by a system comprising a NFVO, a VNFM and a base station, wherein the method comprises:
the method steps of the NFVO according to any one of claims 1 to 4;
the method steps of the VNFM according to any one of claims 5 to 9 and
when a base station detects that the base station encounters congestion, sending (701) a scaling request message to a virtualized network function manager, VNFM, wherein the scaling request message carries a resource parameter used to represent a size of a resource required by the base station, and the scaling request message is used to request the VNFM to allocate, according to the resource parameter, the resource required by the base station; and
if the allocated resource that is sent by the VNFM when the resource is successfully allocated is received, running (702) a service according to the allocated resource, to perform congestion control.

11. The method according to claim 10, wherein the method further comprises:
if a scaling failure message that is sent by the VNFM when the resource is unsuccessfully allocated is received, requesting, by the base station, according to an indication of the scaling failure message, a policy and charging rules function, PCRF, to perform congestion control on the base station.

12. The method according to claim 10 or 11, wherein before the sending a scaling request message to a virtualized network function manager, VNFM, the method further comprises:
Sending, by the base station, a radio access network, RAN, user plane congestion indication to the PCRF; and
Receiving, by the base station, a resource control indication, RCI, rule that is sent by the PCRF according to the RAN user plane congestion indication; and
the sending a scaling request message to a virtualized network function manager VNFM comprises:
sending the scaling request message to the VNFM according to the RCI rule.

13. A virtualized network function manager, VNFM, wherein the VNFM comprises a transceiver (1102) and a processor (1101);
the transceiver (1102) is configured to: receive a scaling request message, wherein the scaling request message carries a resource parameter used to represent a size of a resource required by a base station encountering congestion; send the scaling request message to a network functions virtualization orchestrator, NFVO, wherein the scaling request message is used to request the NFVO to determine a virtualized infrastructure manager, VIM, capable of providing the resource required by the base station; and receive a resource reservation success message from the NFVO, wherein the resource reservation success message carries identification information of the VIM; and
the processor (1101) is configured to: request, according to the resource parameter and the identification information of the VIM, the VIM to allocate the resource required by the base station, and configure the allocated resource for the base station, to perform congestion control on the base station.

14. A network functions virtualization orchestrator, NFVO, wherein NFVO comprises a transceiver (1202) and a processor (1201);
the transceiver (1202) is configured to receive a scaling request message, wherein the scaling request message carries a resource parameter used to represent a size of a resource required by a base station encountering congestion;
the processor (1201) is configured to determine, according to the resource parameter, a virtualized infrastructure manager, VIM, capable of providing the resource required by the base station; and
the transceiver (1202) is further configured to send a resource reservation success message to a virtualized network function manager, VNFM, wherein the resource reservation success message carries identification information of the VIM, and the resource reservation success message is used to instruct the VNFM to request, according to the identification information of the VIM, the VIM to allocate the resource required by the base station, and to instruct the VNFM to configure the allocated resource for the base station.

15. A system comprising:
a NFVO according to claim 13,
a VNFM according to claim 14 and
a base station, wherein the base station comprises a processor (1301) and a transceiver (1302);
the transceiver (1302) is configured to: when the processor (1301) detects that the base station encounters congestion, send a scaling request message to a virtualized network function manager, VNFM, wherein the scaling request message carries a resource parameter used to represent a size of a resource required by the base station, and the scaling request message is used to request the VNFM to allocate, according to the resource parameter, the resource required by the base station; and
the processor (1301) is configured to: if the allocated resource that is sent by the VNFM when the resource is successfully allocated is received, run a service according to the allocated resource, to perform congestion control.

## Patentansprüche

1. Überlastungsregelungsverfahren durch einen virtualisierten Netzwerkfunktionsmanager, VNFM, wobei das Verfahren umfasst:
Empfangen (201), durch den VNFM, einer Skalierungsaufforderungsnachricht, wobei die Skalierungsaufforderungsnachricht einen Ressourcenparameter trägt, der zur Darstellung einer Größe einer Ressource verwendet wird, die eine Basisstation benötigt, die mit einer Überlastung konfrontiert ist;
Senden (202), durch den VNFM, der Skalierungsaufforderungsnachricht an einen Netzwerkfunktionsvirtualisierungsorchestrator, NFVO, wobei die Skalierungsaufforderungsnachricht verwendet wird, den NFVO aufzufordern, einen virtualisierten Infrastrukturmanager, VIM, zu bestimmen, der imstande ist, die Ressource bereitzustellen, die die Basisstation benötigt;
Empfangen (203), durch den VNFM, einer Ressourcenreservierungserfolgsnachricht vom NFVO, wobei die Ressourcenreservierungserfolgsnachricht Identifizierungsinformationen des VIM trägt; und
Auffordern (204), durch den VNFM, gemäß dem Ressourcenparameter und den Identifizierungsinformationen des VIM, des VIM, die Ressource zuzuordnen, die die Basisstation benötigt, und die zugeordnete Ressource für die Basisstation zu konfigurieren, um eine Überlastungsregelungssteuerung bei der Basisstation durchzuführen.

2. Verfahren nach Anspruch 1, wobei die Aufforderung, gemäß dem Ressourcenparameter und den Identifizierungsinformationen des VIM, des VIM, die Ressource zuzuordnen, die die Basisstation benötigt, umfasst:
Bestimmen, durch den VNFM, gemäß dem Ressourcenparameter der Ressourcengröße der Ressource, die die Basisstation benötigt;
Senden, durch den VNFM, einer Ressourcenzuordnungsaufforderungsnachricht an den VIM gemäß den Identifizierungsinformationen des VIM, wobei die Ressourcenzuordnungsaufforderungsnachricht die Ressourcengröße trägt, und die Ressourcenzuordnungsaufforderungsnachricht verwendet wird, um den VIM aufzufordern, die Ressource gemäß der Ressourcengröße zuzuordnen; und
Empfangen, durch den VNFM, der zugeordneten Ressource vom VIM.

3. Verfahren nach Anspruch 1 oder 2, wobei der Ressourcenparameter die Ressourcengröße der Ressource ist, die die Basisstation benötigt, oder ein Verkehrsvolumen von Diensten, welchen keine Ressourcen zugeordnet sind, in der Basisstation.

4. Verfahren nach einem der Ansprüche 1 bis 3, wobei das Verfahren ferner umfasst:
Empfangen, durch den VNFM, einer Skalierungsfehlernachricht vom NFVO, wobei die Skalierungsfehlernachricht eine Ressourcenunzulänglichkeitsangabe enthält, und die Skalierungsfehlernachricht gesendet wird, wenn der NFVO bestimmt, dass kein VIM imstande ist, die Ressource bereitzustellen, die die Basisstation benötigt; und
Senden, durch den VNFM, der Skalierungsfehlernachricht an die Basisstation, wobei die Ressourcenunzulänglichkeitsangabe verwendet wird, um die Basisstation anzuweisen,
eine Richtlinien- und Gebührenregelfunktion, PCRF, anzufordern, um eine Überlastregelung durchzuführen.

5. Überlastungsregelungsverfahren durch einen Netzwerkfunktionsvirtualisierungsorchestrator, NFVO, wobei das Verfahren umfasst:
Empfangen (601), durch den NFVO, einer Skalierungsaufforderungsnachricht, wobei die Skalierungsaufforderungsnachricht einen Ressourcenparameter trägt, der zur Darstellung einer Größe einer Ressource verwendet wird, die eine Basisstation benötigt, die mit einer Überlastung konfrontiert ist;
Bestimmen (602), durch den NFVO, gemäß dem Ressourcenparameter eines virtualisierten Infrastrukturmanagers, VIM, der imstande ist, die Ressource bereitzustellen, die die Basisstation benötigt; und
Senden (603), durch den NFVO, einer Ressourcenreservierungserfolgsnachricht an einen virtualisierten Netzwerkfunktionsmanager, VNFM, wobei die Ressourcenreservierungserfolgsnachricht Identifizierungsinformationen des VIM trägt und die Ressourcenreservierungserfolgsnachricht verwendet wird, um den VNFM anzuweisen, gemäß den Identifizierungsinformationen des VIM, den VIM aufzufordern die Ressource zuzuordnen, die die Basisstation benötigt, und den VNFM anzuweisen, die zugeordnete Ressource für die Basisstation zu konfigurieren.

6. Verfahren nach Anspruch 5, wobei das Bestimmen gemäß dem Ressourcenparameter eines virtualisierten Infrastrukturmanagers, VIM, der imstande ist, die Ressource bereitzustellen, die die Basisstation benötigt, umfasst:
Bestimmen, durch den NFVO, gemäß dem Ressourcenparameter der Ressourcengröße der Ressource, die die Basisstation benötigt;
Abfragen, durch den NFVO, in einer Entsprechung zwischen einem VIM und einer Menge an freien Ressourcen, ob es einen VIM gibt, dessen Menge an freien Ressourcen größer oder gleich der Ressourcengröße ist; und
falls es den VIM gibt, Bestimmen des VIM, dessen Menge an freien Ressourcen größer oder gleich der Ressourcengröße ist, als den VIM, der imstande ist, die Ressource bereitzustellen, die die Basisstation benötigt.

7. Verfahren nach Anspruch 5 oder 6, wobei das Verfahren ferner umfasst:
falls bestimmt wird, dass kein VIM imstande ist, die Ressource bereitzustellen, die die Basisstation benötigt, Senden einer Skalierungsfehlernachricht an den VNFM, wobei die Skalierungsfehlernachricht eine Ressourcenunzulänglichkeitsangabe enthält, wobei die Skalierungsfehlernachricht verwendet wird, um den VNFM aufzufordern die Skalierungsfehlernachricht an die Basisstation zu senden, und die Ressourcenunzulänglichkeitsangabe verwendet wird, die Basisstation anzuweisen, eine Richtlinien- und Gebührenregelfunktion, PCRF, anzufordern, um eine Überlastregelung durchzuführen.

8. Verfahren nach einem der Ansprüche 5 bis 7, das vor dem Senden einer Ressourcenreservierungserfolgsnachricht an einen virtualisierten Netzwerkfunktionsmanager, VNFM, ferner umfasst:
Senden, durch den NFVO, einer Ressourcenreservierungsaufforderungsnachricht an den VIM, wobei die Ressourcenreservierungsaufforderungsnachricht die Größe der Ressource trägt, die die Basisstation benötigt und die Ressourcenreservierungsaufforderungsnachricht verwendet wird, den VIM aufzufordern, gemäß der Ressourcengröße zu bestimmen, ob der VIM imstande ist, die Ressource bereitzustellen, die die Basisstation benötigt; und
Empfangen einer Ressourcenreservierungserfolgsnachricht, die gesendet wird, wenn der VIM bestimmt, dass der VIM imstande ist, die Ressource bereitzustellen, die die Basisstation benötigt.

9. Verfahren nach einem der Ansprüche 5 bis 8, das nach dem Senden einer Ressourcenreservierungserfolgsnachricht an einen virtualisierten Netzwerkfunktionsmanager, VNFM, ferner umfasst:
Empfangen, durch den NFVO, einer Aktualisierungsnachricht vom VNFM, wobei die Aktualisierungsnachricht Identifizierungsinformationen der zugeordneten Ressource, Identifizierungsinformationen der Basisstation und die Identifizierungsinformationen des VIM trägt; und
Verknüpfen, durch den NFVO, der Identifizierungsinformationen der zugeordneten Ressource, der Identifizierungsinformationen der Basisstation und der Identifizierungsinformationen des VIM.

10. Überlastregelungsverfahren durch ein System, umfassend einen NFVO, einen VNFM und eine Basisstation, wobei das Verfahren umfasst:
die Verfahrensschritte des NFVO nach einem der Ansprüche 1 bis 4;
die Verfahrensschritte des VNFM nach einem der Ansprüche 5 bis 9 und
wenn eine Basisstation feststellt, dass die Basisstation mit einer Überlastung konfrontiert ist, Senden (701) einer Skalierungsaufforderungsnachricht an einen virtualisierten Netzwerkfunktionsmanager, VNFM, wobei die Skalierungsaufforderungsnachricht einen Ressourcenparameter trägt, der zur Darstellung einer Größe einer Ressource verwendet wird, die eine Basisstation benötigt, und die Skalierungsaufforderungsnachricht verwendet wird, den VNFM aufzufordern, gemäß dem Ressourcenparameter die Ressource zuzuordnen, die die Basisstation benötigt; und
falls die zugeordnete Ressource, die durch den VNFM gesendet wird, wenn die Ressource erfolgreich zugeordnet ist, empfangen wird, Laufenlassen (702) eines Dienstes gemäß der zugeordneten Ressource, um eine Überlastregelung durchzuführen.

11. Verfahren nach Anspruch 10, wobei das Verfahren ferner umfasst:
falls eine Skalierungsfehlernachricht, die durch den VNFM gesendet wird, wenn die Ressource erfolglos zugeordnet wird, empfangen wird, Auffordern, durch die Basisstation, gemäß einer Angabe der Skalierungsfehlernachricht einer Richtlinien- und Gebührenregelfunktion, PCRF, um eine Überlastregelung an der Basisstation durchzuführen.

12. Verfahren nach Anspruch 10 oder 11, wobei vor dem Senden einer Skalierungsaufforderungsnachricht an einen virtualisierten Netzwerkfunktionsmanager, VNFM, das Verfahren ferner umfasst:
Senden, durch die Basisstation, einer Funkzugangsnetzwerk-, RAN, -Benutzerebenenüberlastungsangabe an die PCRF; und
Empfangen, durch die Basisstation, einer Ressourcensteuerungsangaben-, RCI, -Regel, die durch die PCRF gemäß der RAN-Benutzerebenenüberlastungsangabe gesendet wird; und
das Senden einer Skalierungsaufforderungsnachricht an einen virtualisierten Netzwerkfunktionsmanager, VNFM, umfasst:
Senden der Skalierungsaufforderungsnachricht an den VNFM gemäß der RCI-Regel.

13. Virtualisierter Netzwerkfunktionsmanager, VNFM, wobei der VNFM einen Sendeempfänger (1102) und einen Prozessor (1101) umfasst;
der Sendeempfänger (1102) konfiguriert ist zum: Empfangen einer Skalierungsaufforderungsnachricht, wobei die Skalierungsaufforderungsnachricht einen Ressourcenparameter trägt, der zur Darstellung einer Größe einer Ressource verwendet wird, die eine Basisstation benötigt, die mit einer Überlastung konfrontiert ist; Senden der Skalierungsaufforderungsnachricht an einen Netzwerkfunktionsvirtualisierungsorchestrator, NFVO, wobei die Skalierungsaufforderungsnachricht verwendet wird, den NFVO aufzufordern, einen virtualisierten Infrastrukturmanager, VIM, zu bestimmen, der imstande ist, die Ressource bereitzustellen, die die Basisstation benötigt; und Empfangen einer Ressourcenreservierungserfolgsnachricht vom NFVO, wobei die Ressourcenreservierungserfolgsnachricht Identifizierungsinformationen des VIM trägt; und
der Prozessor (1101) konfiguriert ist zum: Auffordern gemäß dem Ressourcenparameter und den Identifizierungsinformationen des VIM, des VIM, die Ressource zuzuordnen, die die Basisstation benötigt, und die zugeordnete Ressource für die Basisstation zu konfigurieren, um eine Überlastungsregelungssteuerung bei der Basisstation durchzuführen.

14. Netzwerkfunktionsvirtualisierungsorchestrator, NFVO, wobei NFVO einen Sendeempfänger (1202) und einen Prozessor (1201) umfasst;
der Sendeempfänger (1202) konfiguriert ist zum Empfangen einer Skalierungsaufforderungsnachricht, wobei die Skalierungsaufforderungsnachricht einen Ressourcenparameter trägt, der zur Darstellung einer Größe einer Ressource verwendet wird, die eine Basisstation benötigt, die mit einer Überlastung konfrontiert ist;
der Prozessor (1201) konfiguriert ist zum Bestimmen gemäß dem Ressourcenparameter eines virtualisierten Infrastrukturmanagers, VIM, der imstande ist, die Ressource bereitzustellen, die die Basisstation benötigt; und
der Sendeempfänger (1202) ferner konfiguriert ist zum Senden einer Ressourcenreservierungserfolgsnachricht an einen virtualisierten Netzwerkfunktionsmanager, VNFM, wobei die Ressourcenreservierungserfolgsnachricht Identifizierungsinformationen des VIM trägt und die Ressourcenreservierungserfolgsnachricht verwendet wird, um den VNFM anzuweisen, gemäß den Identifizierungsinformationen des VIM, den VIM aufzufordern die Ressource zuzuordnen, die die Basisstation benötigt, und den VNFM anzuweisen, die zugeordnete Ressource für die Basisstation zu konfigurieren.

15. System, umfassend:
einen NFVO nach Anspruch 13,
einen VNFM nach Anspruch 14 und
eine Basisstation, wobei die Basisstation einen Sendeempfänger (1302) und einen Prozessor (1301) umfasst;
der Sendeempfänger (1302) konfiguriert ist zum: wenn der Prozessor (1301) feststellt, dass die Basisstation mit einer Überlastung konfrontiert ist, Senden einer Skalierungsaufforderungsnachricht an einen virtualisierten Netzwerkfunktionsmanager, VNFM, wobei die Skalierungsaufforderungsnachricht einen Ressourcenparameter trägt, der zur Darstellung einer Größe einer Ressource verwendet wird, die die Basisstation benötigt, und die Skalierungsaufforderungsnachricht verwendet wird, den VNFM aufzufordern, gemäß dem Ressourcenparameter die Ressource zuzuordnen, die die Basisstation benötigt; und
der Prozessor (1301) konfiguriert ist zum: falls die zugeordnete Ressource, die durch den VNFM gesendet wird, wenn die Ressource erfolgreich zugeordnet ist, empfangen wird, Laufenlassen eines Dienstes gemäß der zugeordneten Ressource, um eine Überlastregelung durchzuführen.

## Revendications

1. Procédé de régulation de l'encombrement par un gestionnaire de fonctions réseau virtualisées, VNFM, le procédé comprenant les étapes suivantes :
recevoir (201), par le VNFM, un message de requête de montée en charge, le message de requête de montée en charge contenant un paramètre de ressource qui est utilisé pour représenter une taille d'une ressource requise par une station de base rencontrant un encombrement ;
envoyer (202), par le VNFM, le message de requête de montée en charge à un orchestrateur de virtualisation de fonctions réseau, NFVO, le message de requête de montée en charge étant utilisé pour demander au NFVO de déterminer un gestionnaire d'infrastructure virtualisée, VIM, capable de fournir la ressource requise par la station de base ;
recevoir (203), par le VNFM, un message de succès de réservation de ressource émis à partir du NFVO, le message de succès de réservation de ressource contenant des informations d'identification du VIM ; et
demander (204), par le VNFM, selon le paramètre de ressource et les informations d'identification du VIM, au VIM d'attribuer la ressource requise par la station de base, et configurer la ressource attribuée pour la station de base, afin d'exécuter une régulation de l'encombrement sur la station de base.

2. Procédé selon la revendication 1, dans lequel l'étape de demande, selon le paramètre de ressource et les informations d'identification du VIM, au VIM d'attribuer la ressource requise par la station de base comprend :
déterminer, par le VNFM, selon le paramètre de ressource, la taille de ressource de la ressource requise par la station de base ;
envoyer, par le VNFM, un message de requête d'attribution de ressource au VIM selon les informations d'identification du VIM, le message de requête d'attribution de ressource contenant la taille de ressource, et le message de requête d'attribution de ressource étant utilisé pour demander au VIM d'attribuer la ressource selon la taille de ressource ; et
recevoir, par le VNFM, la ressource attribuée à partir du VIM.

3. Procédé selon la revendication 1 ou 2, dans lequel le paramètre de ressource est la taille de ressource de la ressource requise par la station de base ou un volume de trafic de services, auquel aucune ressource n'est attribuée, dans la station de base.

4. Procédé selon l'une quelconque des revendications 1 à 3, comprenant en outre :
recevoir, par le VNFM, un message d'échec de montée en charge émis à partir du NFVO, le message d'échec de montée en charge contenant une indication d'insuffisance de ressource, et le message d'échec de montée en charge étant envoyé lorsque le NFVO détermine qu'aucun VIM n'est capable de fournir la ressource requise par la station de base ; et
envoyer, par le VNFM, le message d'échec de montée en charge à la station de base, l'indication d'insuffisance de ressource étant utilisée pour ordonner à la station de base de demander à une fonction de règles de politique et de facturation, PCRF, d'exécuter une régulation de l'encombrement.

5. Procédé de régulation de l'encombrement par un orchestrateur de virtualisation de fonctions réseau, NFVO, comprenant :
recevoir (601), par le NFVO, un message de requête de montée en charge, le message de requête de montée en charge contenant un paramètre de ressource utilisé pour représenter une taille d'une ressource requise par une station de base rencontrant un encombrement ;
déterminer (602), par le NFVO, selon le paramètre de ressource, un gestionnaire d'infrastructure virtualisée, VIM, capable de fournir la ressource requise par la station de base ; et
envoyer (603), par le NFVO, un message de succès de réservation de ressource à un gestionnaire de fonctions réseau virtualisées, VNFM, le message de succès de réservation de ressource contenant des informations d'identification du VIM, et le message de succès de réservation de ressource étant utilisé pour ordonner au VNFM de demander, selon les informations d'identification du VIM, au VIM d'attribuer la ressource requise par la station de base, et pour ordonner au VNFM de configurer la ressource attribuée pour la station de base.

6. Procédé selon la revendication 5, dans lequel l'étape de détermination, selon le paramètre de ressource, d'un gestionnaire d'infrastructure virtualisée VIM capable de fournir la ressource requise par la station de base comprend :
déterminer, par le NFVO, selon le paramètre de ressource, la taille de ressource de la ressource requise par la station de base ;
demander, par le NFVO, dans une correspondance entre un VIM et une quantité de ressources inactives, si un VIM dont une quantité de ressources inactives est supérieure ou égale à la taille de ressource existe ; et
si le VIM existe, déterminer le VIM dont la quantité de ressources inactives est supérieure ou égale à la taille de ressource comme le VIM capable de fournir la ressource requise par la station de base.

7. Procédé selon la revendication 5 ou 6, comprenant en outre :
s'il est déterminé qu'aucun VIM n'est capable de fournir la ressource requise par la station de base, envoyer un message d'échec de montée en charge au VNFM, le message d'échec de montée en charge contenant une indication d'insuffisance de ressource, le message d'échec de montée en charge étant utilisé pour demander au VNFM d'envoyer le message d'échec de montée en charge à la station de base, et l'indication d'insuffisance de ressource étant utilisée pour ordonner à la station de base de demander à une fonction de règles de politique et de facturation, PCRF, d'exécuter une régulation de l'encombrement.

8. Procédé selon l'une quelconque des revendications 5 à 7, avant l'étape d'envoi d'un message de succès de réservation de ressource à un gestionnaire de fonctions réseau virtualisées VNFM, comprenant en outre :
envoyer, par le NFVO, un message de requête de réservation de ressource au VIM, le message de requête de réservation de ressource contenant la taille de la ressource requise par la station de base, et le message de requête de réservation de ressource étant utilisé pour demander au VIM de déterminer selon la taille de ressource, si le VIM est capable de fournir la ressource requise par la station de base ; et
recevoir un message de succès de réservation de ressource qui est envoyé lorsque le VIM détermine que le VIM est capable de fournir la ressource requise par la station de base.

9. Procédé selon l'une quelconque des revendications 5 à 8, après l'étape d'envoi d'un message de succès de réservation de ressource à un gestionnaire de fonctions réseau virtualisées VNFM, comprenant en outre :
recevoir, par le NFVO, un message de mise à niveau émis à partir du VNFM, le message de mise à niveau contenant des informations d'identification de la ressource attribuée, des informations d'identification de la station de base, et les informations d'identification du VIM ; et
associer, par le NFVO, les informations d'identification de la ressource attribuée, les informations d'identification de la station de base, et les informations d'identification du VIM.

10. Procédé de régulation de l'encombrement par un système comprenant un NFVO, un VNFM et une station de base, comprenant :
les étapes de procédé du NFVO selon l'une quelconque des revendications 1 à 4 ;
les étapes de procédé du VNFM selon l'une quelconque des revendications 5 à 9 et lorsqu'une station de base détecte que la station de base rencontre un encombrement, envoyer (701) un message de requête de montée en charge à un gestionnaire de fonctions réseau virtualisées, VNFM, le message de requête de montée en charge contenant un paramètre de ressource utilisé pour représenter une taille d'une ressource requise par la station de base, et le message de requête de montée en charge étant utilisé pour demander au VNFM d'attribuer, selon le paramètre de ressource, la ressource requise par la station de base ; et
si la ressource attribuée qui est envoyée par le VNFM lorsque la ressource est attribuée avec succès est reçue, exécuter (702) un service selon la ressource attribuée, pour effectuer une régulation de l'encombrement.

11. Procédé selon la revendication 10, comprenant en outre :
si un message d'échec de montée en charge qui est envoyé par le VNFM lorsque la ressource est attribuée sans succès est reçu, demander, par la station de base, selon une indication du message d'échec de montée en charge, à une fonction de règles de politique et de facturation, PCRF, d'exécuter une régulation de l'encombrement sur la station de base.

12. Procédé selon la revendication 10 ou 11, avant l'étape d'envoi d'un message de requête de montée en charge à un gestionnaire de fonctions réseau virtualisées, VNFM, comprenant en outre :
envoyer, par la station de base, une indication d'encombrement de plan utilisateur de réseau d'accès radio, RAN, au PCRF ; et
recevoir, par la station de base, une règle d'indication de contrôle de ressource, RCI, qui est envoyée par le PCRF selon l'indication d'encombrement de plan utilisateur de RAN ; et
l'étape d'envoi d'un message de requête de montée en charge à un gestionnaire de fonctions réseau virtualisées VNFM comprend :
envoyer le message de requête de montée en charge au VNFM selon la règle RCI.

13. Gestionnaire de fonctions réseau virtualisées, VNFM, dans lequel le VNFM comprend un émetteur-récepteur (1102) et un processeur (1101) ;
l'émetteur-récepteur (1102) est configuré pour : recevoir un message de requête de montée en charge, le message de requête de montée en charge contenant un paramètre de ressource utilisé pour représenter une taille d'une ressource requise par une station de base rencontrant un encombrement ; envoyer le message de requête de montée en charge à un orchestrateur de virtualisation de fonctions réseau, NFVO, le message de requête de montée en charge étant utilisé pour demander au NFVO de déterminer un gestionnaire d'infrastructure virtualisée, VIM, capable de fournir la ressource requise par la station de base ; et recevoir un message de succès de réservation de ressource à partir du NFVO, le message de succès de réservation de ressource contenant des informations d'identification du VIM ; et
le processeur (1101) est configuré pour : demander, selon le paramètre de ressource et les informations d'identification du VIM, au VIM d'attribuer la ressource requise par la station de base, et configurer la ressource attribuée pour la station de base, afin d'exécuter une régulation de l'encombrement sur la station de base.

14. Orchestrateur de virtualisation de fonctions réseau, NFVO, dans lequel le NFVO comprend un émetteur-récepteur (1202) et un processeur (1201) ;
l'émetteur-récepteur (1202) est configuré pour recevoir un message de requête de montée en charge, le message de requête de montée en charge contenant un paramètre de ressource utilisé pour représenter une taille d'une ressource requise par une station de base rencontrant un encombrement ;
le processeur (1201) est configuré pour déterminer, selon le paramètre de ressource, un gestionnaire d'infrastructure virtualisée, VIM, capable de fournir la ressource requise par la station de base ; et
l'émetteur-récepteur (1202) est en outre configuré pour envoyer un message de succès de réservation de ressource à un gestionnaire de fonctions réseau virtualisées, VNFM, le message de succès de réservation de ressource contenant des informations d'identification du VIM, et le message de succès de réservation de ressource étant utilisé pour ordonner au VNFM de demander, selon les informations d'identification du VIM, au VIM d'attribuer la ressource requise par la station de base, et pour ordonner au VNFM de configurer la ressource attribuée pour la station de base.

15. Système comprenant :
un NFVO selon la revendication 13,
un VNFM selon la revendication 14 et
une station de base, la station de base comprenant un processeur (1301) et un émetteur-récepteur (1302) ;
l'émetteur-récepteur (1302) est configuré pour : lorsque le processeur (1301) détecte que la station de base rencontre un encombrement, envoyer un message de requête de montée en charge à un gestionnaire de fonctions réseau virtualisées, VNFM, le message de requête de montée en charge contenant un paramètre de ressource utilisé pour représenter une taille d'une ressource requise par la station de base, et le message de requête de montée en charge étant utilisé pour demander au VNFM d'attribuer, selon le paramètre de ressource, la ressource requise par la station de base ; et
le processeur (1301) est configuré pour : si la ressource attribuée qui est envoyée par le VNFM lorsque la ressource est attribuée avec succès est reçue, exécuter un service selon la ressource attribuée, pour effectuer une régulation de l'encombrement.
